(19) **Europäisches Patentamt / European Patent Office / Office européen des brevets**

(11) **EP 4 650 905 A1**

(12) **EUROPEAN PATENT APPLICATION**

(43) Date of publication:
**19.11.2025 Bulletin 2025/47**

(21) Application number: **25173812.6**

(22) Date of filing: **30.04.2025**

(51) International Patent Classification (IPC):
**G05D 23/19** $^{(2006.01)}$    **F24D 19/10** $^{(2006.01)}$
**F24F 11/30** $^{(2018.01)}$

(52) Cooperative Patent Classification (CPC):
**G05D 23/1931; F24D 19/1018; F24F 11/30;
G05D 23/1905**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.05.2024 EP 24175607**

(71) Applicant: **Siemens Schweiz AG
8047 Zürich (CH)**

(72) Inventors:
• **Marbach, Kuno
6020 Emmenbrücke (CH)**
• **Petry, Karl-Heinz
8864 Reichenburg (CH)**

(74) Representative: **Siemens Patent Attorneys
Postfach 22 16 34
80506 München (DE)**

Remarks:
Amended claims in accordance with Rule 137(2) EPC.

(54) **MAXIMUM SETTING**

(57) Maximum setting. A method of limiting a rate of exchange of thermal energy via a thermal energy exchanger (4) of an assembly (1) comprising: reading a first time series of signals from a pair of temperature sensors (5a, 5b) and a second time series of signals from an ultrasonic sensor; determining a third time series of rates of thermal energy exchange by the thermal energy exchanger (4) based on the first and the second series; producing an averaged series of rates; producing a first bounded series of rates by replacing rates that are less than a lower threshold (13) with the lower threshold (13); producing a second bounded series of rates by replacing rates that are greater than an upper threshold (15) with rates that equal the upper threshold (15); producing a maximum rate by applying a moving maximum filter (17) to the second bounded series.

FIG 2

EP 4 650 905 A1

## Description

Background

The present disclosure deals with a method and an assembly for estimating a maximum exchange of thermal energy via a system for heating and/or ventilation and/or air-conditioning. More specifically, the present disclosure focuses on maximum exchange of thermal energy exchange by a thermal energy exchanger of an installation for heating and/or ventilation and/or air-conditioning.

Installations for heating and/or ventilation, and/or air-conditioning (HVAC) are commonly made up of a plurality of circuits. Each circuit comprises one or several terminal units to provide heating and/or cooling to various parts of a building. Terminal units can be heating devices and/or cooling devices. A terminal unit of a domestic heating system can be a heat exchanger such as a radiator.

Factors such as pipe cross-sections, valve characteristics, positions of terminal units within the distribution network etc. affect the exchange of thermal energy by the heat exchangers of a HVAC installation. These factors yield hydraulic resistances that vary throughout the system. Hydraulic resistances relate pressure drop to flow of a heating medium or to flow of a coolant.

HVAC installations such as heating systems often require hydronic balancing. Hydronic balancing overcomes issues due to different hydraulic resistances of the circuits of a HVAC installation. Hydronic balancing of heating installations of commercial and/or industrial and/or residential sites ensures that each circuit of a system experiences adequate flow.

That said, hydronic balancing is generally performed on a site as designed and/or as built. Since the hydraulic resistances of a HVAC installation vary throughout operation, exchange of thermal energy by the heat exchangers of an installation can become inadequate and/or incorrect over time.

A European patent application EP3428767A1 was filed by SIEMENS SCHWEIZ AG on 3 July 2018. EP3428767A1 claims a priority date of 11 July 2017. A patent application US2019/018432A1 was subsequently filed before the USPTO on 10 July 2018. A patent EP3428767B1 was granted in Europe on 11 December 2019. EP3428767A1, EP3428767B1, and US2019/018432A1 deal with control gain automation.

A position of a valve of a heat exchanger is determined in accordance with EP3428767B1 from a set point value and from a default flow rate. Determination of the position of the valve involves an opening curve of the valve. The valve assembly of EP3428767B1 affords determinations of valve positions at flow rates that are substantially zero. The valve assembly of EP3428767B1 also affords determinations of valve positions after the design stage of a commercial and/or industrial and/or residential site. The determined valve positions do, however, depend on a default flow rate. That default flow rate can be inadequate because hydraulic resistances can change over time.

A patent application EP3115703A1 was filed by SIEMENS SCHWEIZ AG on 20 April 2016. The application was published on 11 January 2017. A European patent EP3115703B1 was granted on 18 March 2020. The patent application EP3115703A1 and the patent EP3115703B1 address control of heating and/or ventilation and/or air conditioning systems. To that end, limit positions are determined for each of the valves of the heat exchangers of a HVAC installation. The determination of limit positions involves temperature measurements and temperature rise quantities derived from the temperature measurements. Determinations of limit positions and of flow settings of valves in accordance with EP3115703B1 can be carried out after the design stage of a building.

Another patent application EP3489591A1 was filed by SIEMENS SCHWEIZ AG on 18 October 2018. The application claims a priority date of 24 November 2017 and was published on 29 May 2019. EP3489591A1 discloses a smart thermal energy exchanger.

EP3489591A1 deals with a control system limiting flow through a heat exchanger to a determined maximum flow value. Determination of the maximum flow value through a heat exchanger is based on a characteristic transfer function of the heat exchanger. The characteristic transfer function is derived from a plurality of values of heat exchanger effectiveness (HXeff). The characteristic transfer function is also derived from a plurality of flow values. The values of heat exchanger effectiveness (HXeff) and the flow values are recorded by the control system of EP3489591A1 at various points in time. Determinations of maximum flow settings in accordance with EP3489591A1 can be carried out after the design stage of a building.

A patent application WO2010/010092A2 was filed by BELIMO HOLDING AG and by KELLER URS on 21 July 2009. The application was published on 28 January 2010. WO2010/010092A2 deals with a method for the hydraulic compensation and control of a heating or cooling system.

In accordance with WO2010/010092A2, an original range of input signals of a valve is restricted to a limited range of input signals. The original range of input signals is then mapped to the restricted range. The restriction is chosen such that the maximum flow of the restricted range is less than the maximum feasible flow through of the valve.

Another European patent application EP3940497A1 was filed by SIEMENS SCHWEIZ AG on 22 December 2020. The application was published on 19 January 2022. A priority date of 15 July 2020 is claimed. EP3940497A1 deals with a maximum flow setting. The application EP3940497A1 resulted in a patent EP3940497B1 that was granted on 15 March 2023.

A maximum flow setting is disclosed in the application EP3940497A1. To that end, a time series of flow rates is obtained and averaged. The smallest measures of the averaged times series are replaced with lower threshold values. Likewise, the greatest measures of the time series are replaced with upper threshold values. After these replacements, a maximum filter is applied and a maximum flow rate is obtained. Flow through a valve of a system for heating and/or ventilation and/or air-conditioning is limited to this maximum value.

In contrast to EP3940497A1, the instant disclosure deals with estimates of maximum thermal power exchanged by the thermal energy exchangers of a system for heating and/or ventilation and/or air-conditioning. The present disclosure affords estimates of maximum thermal power where the hydraulic resistances of a HVAC installation change over time. That is, the instant disclosure affords estimates of maximum thermal power after the design stage of a commercial and/or industrial and/or residential site.

It is worth stressing that limitation of flow is not the same as limitation of exchange of thermal energy because of an issue known as $\Delta T$ degradation. That is, the difference $\Delta T$ between supply temperatures and return temperatures of thermal energy exchangers and of HVAC systems tends to decrease with increasing flow $\varphi$. In other words, flow $\varphi$ and thermal power are generally not proportional to one another.

A patent application US2018/210474A1 was filed by BELIMO HOLDING AG on 19 March 2018. The application was published on 26 July 2018. A priority date of 5 September 2011 is claimed. US2018/210474A1 deals with a method for operating and/or monitoring an HVAC system.

Transients within HVAC circuits can cause valve controllers of local heat exchangers to open positions of their valves. Those valve positions can in practice exceed the limits of what is necessary to comply with a demand for heating or for cooling. Excessive flow through the thermal energy exchangers of the HVAC circuit results in waste of power. Excessive flow through the thermal energy exchangers of the HVAC circuit can also result in additional wear of the moving parts of a valve. The instant disclosure introduces a dynamic maximum setting for valves of heat exchangers of a HVAC circuit. The dynamic maximum setting mitigates excessive exchange of thermal energy by such heat exchangers and limits ramifications of transients within HVAC circuits.

Summary

The present disclosure deals with a control algorithm that can be implemented by a valve controller and/or by a control system. The valve controller and/or the control system can, by way of non-limiting examples, be employed in an enclosed environment and/or in an installation and/or on a premise and/or in a building. The control algorithm reads a first time series indicative of temperature drops.

The control algorithm also reads a second time series indicative of flow rates. Rates of thermal energy exchange are produced from these time series.

The procedure iterates to yield a time series of rates of thermal energy and/or of thermal power.

The time series of thermal energy and/or the time series of thermal power is averaged by determining a mean such as an hourly mean. The mean can also be calculated to obtain the average. After averaging, a bounded series is produced. The bounded series is produced by replacing rates of the series that are less than a lower threshold and/or greater than an upper threshold.

As a result, the averaged series is bounded between a minimum value of thermal energy exchange and a maximum value of thermal energy exchange. The maximum value of thermal energy exchange is preferably provided by a user and/or by an operator. Likewise, the minimum value of thermal energy exchange is preferably provided by a user and/or by an operator.

Eventually, a maximum value filter is applied. The filter is triggered every few hours and has a window length that exceeds the trigger interval.

The filter produces a dynamic setting of maximum thermal energy exchange. The dynamic setting of maximum thermal energy can then be used by the valve controller and/or by the control system. The filter can also produce a dynamic setting of maximum thermal power. The dynamic setting of maximum thermal power can then be used by the valve controller and/or by the control system.

The averaged series can be bounded between a percentage value such as twenty percent or thirty percent or fifty percent and a value of maximum thermal energy. Likewise, the averaged series can be bounded between a percentage value such as twenty percent or thirty percent or fifty percent and a value of maximum thermal power. These lists of percentage values are not exhaustive. Algorithms employing low percentage values may require high amounts of computational power.

Algorithms employing high percentage values incur a risk of producing dynamic settings of maximum thermal energy that are too high. The value is ideally bounded between a percentage value of or near thirty percent and a value of maximum thermal energy. Likewise, algorithms employing high percentage values incur a risk of producing dynamic settings of maximum thermal power that are too high. The value is ideally bounded between a percentage value of or near thirty percent and a value of maximum thermal power.

The maximum filter can be triggered every two hours, every four hours, every eight hours, or every twelve hours. This list of trigger intervals is not exhaustive. Short trigger intervals afford values of dynamic maximum flow with better granularity. That said, short trigger intervals involve high levels of computational power. The trigger interval is advantageously set to four hours.

The window length of the maximum value filter can exceed twelve hours. The window length of the maximum value filter can also be twenty-four hours, forty-eight hours or even exceed ninety-six hours. The mentioned values of window lengths are not exhaustive. The window length of the maximum value filter also determines the granularity of the produced maximum rates of thermal energy exchange and/or maximum amounts of thermal power. Short window lengths of the filter yield more nuanced and more granular maximum rates of thermal energy exchange and/or maximum amounts of thermal power. However, short window lengths may also yield maximum rates of thermal energy exchange and/or maximum amounts of thermal power that are too low. The window length of the moving maximum filter advantageously is twenty-four hours.

In an embodiment having a user interface, a user may harness the interface to provide variables concerning the upper threshold of thermal energy exchange. A user may also harness the user interface to provide variables concerning the lower threshold of thermal energy exchange. Valves such as control valves and/or control systems having user interfaces afford interactions between users and the algorithm. Maintenance personnel and/or building operators can then change the constraints of the algorithm during maintenance work and during repair work.

In an embodiment having connectivity to a mobile device, a user may harness an application on the mobile device to enter variables concerning the lower and the upper thresholds of thermal energy exchange. An operator may also harness an application on the mobile device to enter variables concerning the lower and the upper thresholds of thermal energy exchange. To that end, a valve such as a control valve and/or a control system can provide connectivity with mobile devices such as radio frequency connectivity. The values entered by a user or by an operator are then forwarded from the application to a data transmission interface of the mobile device. The data transmission interface of the mobile device forwards these values to a data transmission interface of the valve or of the control system. The valve and/or the control system reads the variables concerning the lower and the upper thresholds of energy exchange from its interface. The valve and/or the control system feeds these variables to its control algorithm. More specifically, a controller can read the variables and feed them to a control algorithm.

Solutions involving local user interfaces or user interfaces via mobile devices can also be configured via such interfaces. Users such as maintenance personnel and/or building operators may tune parameters such as trigger intervals and/or window lengths in accordance with local, specific needs. Also, settings such as percentages of maximum thermal energy and/or percentages of maximum thermal power can change in accordance with a user's preferences.

In a local embodiment, a valve such as a control valve and/or a valve associated with a thermal energy exchanger implements the control algorithm. The valve thus locally controls a maximum exchange of thermal energy. The valve can also locally control a maximum exchange of thermal power.

The solution can be retrofitted to legacy heat exchangers and/or to legacy terminal units. The solution confers advantages in terms of data privacy since signals and/or measures of flow rates need not be transmitted to a remote controller. The solution also affords fast response times because data transmission to a remote controller is limited or even eliminated.

In an alternate embodiment, a remote controller such as a cloud computer implements the control algorithm. An assembly such as an assembly having a control valve connects to the remote controller using a communication protocol and a communication bus. In an embodiment, the assembly transmits signals indicative of flow rates and/or measures of flow rates to the remote controller. The assembly also transmits signals indicative of supply temperatures and return temperatures to the remote controller. In another embodiment, the assembly transmits signals indicative of energy exchange to the remote controller.

The remote controller leverages such flow rates and such temperatures. The remote controller computes a maximum (rate of) thermal energy exchange and/or a maximum amount of thermal power. The maximum rate of thermal energy exchange and/or the maximum amount of thermal power rate is transmitted back to the valve of a HVAC installation. The maximum rate of thermal energy exchange and/or the maximum amount of thermal power rate can also be transmitted back to a controller of a HVAC installation. The valve and/or the controller of a HVAC installation then locally applies the maximum (rate of) thermal energy exchange as obtained from the remote controller. The valve and/or the controller of the HVAC installation can also locally apply the maximum amount of thermal power as obtained from the remote controller.

Solutions involving remote controllers such as cloud computers enable local valves and/or controllers of local HVAC installations having limited computational resources. In an advantageous embodiment, the local controller is or comprises an inexpensive, low-power system on a chip microcontroller having integrated wireless connectivity. In a special embodiment, the chip microcontroller has a memory not exceeding one mebibyte.

Brief description of the drawings

Various features will become apparent to those skilled in the art from the following detailed description of the disclosed non-limiting embodiments. The drawings that accompany the detailed description can be briefly described as follows:

FIG 1 schematically illustrates of an assembly implementing the control algorithm of the instant disclosure.

FIG 2 is a flow chart of a control algorithm in accordance with the instant disclosure.

FIG 3 schematically shows an assembly in communication with a mobile handheld device.

FIG 4 schematically shows an assembly in communication with a remote controller.

Detailed description

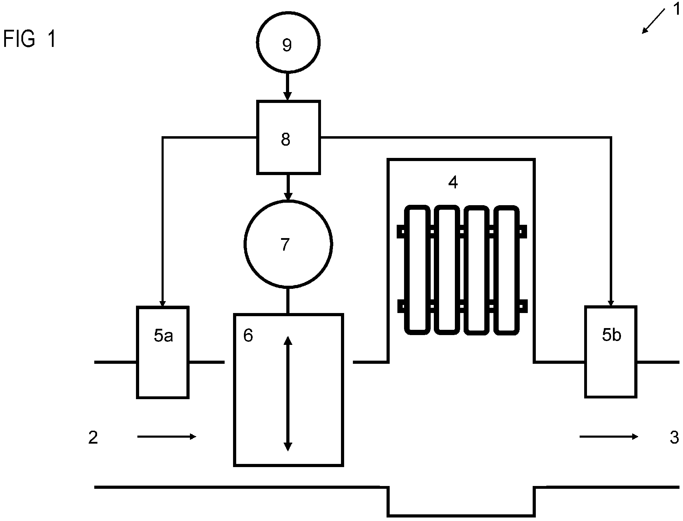

FIG 1 shows an assembly (1) having an inlet port (2) and an outlet port (3). A fluid path extends between the inlet port (2) and the outlet port (3). A valve member (6) such as a conical valve member and/or a ball-type valve member is situated in the fluid path. The valve member (6) can move to a closed position which obturates the fluid path. The valve member (6) can also move to an open position which opens the fluid path.

According to an aspect of the present disclosure, the valve member (6) as shown in FIG 1 is a valve member of a two-way valve. According to another aspect of the present disclosure, the valve member (6) is a valve member of a three-way valve.

In an embodiment, a system for heating and/or ventilation and/or air-conditioning comprises the assembly (1). In a related embodiment, the assembly (1) is a system for heating and/or ventilation and/or air-conditioning.

An actuator (7) such as a valve actuator couples, preferably mechanically couples, to the valve member (6). The actuator (7) can couple to the valve member (6) via a stem. The actuator (7) is in communication with a controller (8) such as a valve controller (8) and/or a local controller (8). The controller (8) ideally connects to the actuator (7) via a digital-to-analog converter. The digital-to-analog converter produces analog output signals for the actuator (7) from digital output signals of the controller (8). An amplifier can further amplify the analog signals originating from the digital-to-analog converter.

The controller (8) advantageously comprises a microcontroller and/or a microprocessor. In an embodiment, the controller (8) is a microcontroller and/or is a microprocessor. The controller (8) preferably comprises a memory such as a non-volatile memory. That is, the controller (8) can comprise a microcontroller and a non-volatile memory. The controller (8) can also comprise a microprocessor and a non-volatile memory. The controller (8) can still be a microcontroller having a non-volatile memory. The controller (8) can also be a microprocessor having a non-volatile memory.

In an alternate embodiment, the controller (8) comprises an application-specific integrated circuit such as an application-specific integrated circuit having a non-volatile memory. The controller (8) can still be an application-specific integrated circuit such as an application-specific integrated circuit having a non-volatile memory.

Application-specific integrated circuits can be highly effective at obtaining and processing readings such as the readings from the sensors (5a, 5b). The sensors (5a, 5b) will be described hereafter.

In yet another embodiment, the controller (8) comprises a freely-programmable gate array such as a freely-programmable gate array having a non-volatile memory. The controller (8) can still be a freely-programmable gate array such as a freely-programmable gate array having a non-volatile memory. Freely-programmable gate arrays can be highly effective at obtaining and processing readings such as the readings from the sensors (5a, 5b). The sensors (5a, 5b) will be described hereafter.

At least one thermal energy exchanger (4) is arranged in the fluid path. The at least one thermal energy exchanger (4) can comprise a heater. The at least one thermal energy exchanger (4) can be a heater. The at least one thermal energy exchanger (4) can also comprise a cooling device such as one or more chilled beams. The at least one thermal energy exchanger (4) can be a cooling device such as one or more chilled beams.

A pair of sensors (5a, 5b) is arranged on either side of the at least one thermal energy exchanger (4). The pair of sensors (5a, 5b) is in communication with the fluid in the fluid path. The pair of sensors (5a, 5b) as shown in FIG 1 comprises a first sensor (5a) at or near the inlet port (2). The temperature sensor (5a) at or near the inlet port (2) can advantageously comprise a sensor (5a) for recording a supply temperature. The temperature sensor (5a) at or near the inlet port (2) can ideally be a sensor (5a) for recording a supply temperature. The pair of sensors (5a, 5b) as shown in FIG 1 comprises a second sensor (5b) at or near the outlet port (3). The temperature sensor (5b) at or near the outlet port (3) can advantageously comprise a sensor (5b) for recording a return temperature. The temperature sensor (5b) at or near the outlet port (3) can ideally be a sensor (5b) for recording a return temperature.

In a special embodiment, the controller (8) comprises an analog-to-digital converter. The analog-to-digital converter provides conversion of analog signals from the sensors (5a, 5b) into (digital) measures. The analog-to-digital converter can be an integral part of the controller (8). To achieve compactness, the analog-to-digital converter and the controller (8) can be arranged on the same system-on-a-chip.

In another special embodiment, the controller (8) comprises a separate analog-to-digital converter for each sensor (5a, 5b). The analog-to-digital converters provide conversion of analog signals from each of the sensors (5a, 5b) into (digital) measures. The analog-to-digital converters can be integral parts of the controller (8). To achieve compactness, the analog-to-digital converters and the controller (8) can be arranged on the same system-on-a-chip.

In yet another special embodiment, the controller (8) comprises a sigma-delta converter. The sigma-delta converter provides conversion of analog signals from the sensors (5a, 5b) into (digital) measures. The sigma-delta converter can be an integral part of the controller (8). To achieve compactness, the sigma-delta converter and the controller (8) can be arranged on the same system-on-a-chip.

In still another special embodiment, the controller (8) comprises a separate sigma-delta converter for each sensor (5a, 5b). The sigma-delta converters provide conversion of analog signals from the sensors (5a, 5b) into (digital) measures. The sigma-delta converters can be integral parts of the controller (8). To achieve compactness, the sigma-delta converters and the controller (8) can be arranged on the same system-on-a-chip.

The assembly can also comprise a flow sensor. For example, the first sensor (5a) at or near the inlet can record a pressure $p_i$ at the inlet port (2). In a special embodiment, the first sensor (5a) can record a pressure and a temperature at the inlet port (2). The second sensor (5b) at or near the outlet port (3) can record a pressure $p_o$ at the outlet port (3). In a special embodiment, the second sensor (5b) can record a pressure and a temperature at the outlet port (3). A flow velocity v can then be determined from the pressure drop $\Delta p = p_i - p_o$:

$$v \propto \sqrt{\Delta p}$$

The controller (8) also has an interface for reading an input signal (9). The signal (9) can be an analog signal such as an analog signal in the range of several millivolts. The analog signal can also be in the range from zero to twenty milliamperes. In another embodiment, the signal (9) is a digital signal transmitted via a digital communication interface.

In another embodiment, a flow sensor such as an ultrasonic flow sensor is employed to record signals indicative of flow. For example, the assembly (1) can comprise a first ultrasonic transducer. The assembly (1) can also comprise a second ultrasonic transducer. The first ultrasonic transducer emits an ultrasonic signal into the fluid path. The ultrasonic signal is reflected and then recorded by the second ultrasonic transducer. A flow velocity and/or a flow can be determined based on the travel time of the ultrasonic signal.

In a special embodiment, the controller (8) comprises an analog-to-digital converter. The analog-to-digital converter provides conversion of analog signals from the (ultrasonic) flow sensor into (digital) measures. The analog-to-digital converter can be an integral part of the controller (8). To achieve compactness, the analog-to-digital converter and the controller (8) can be arranged on the same system-on-a-chip.

In another special embodiment, the controller (8) comprises a sigma-delta converter. The sigma-delta converter provides conversion of analog signals from the (ultrasonic) flow sensor into (digital) measures. The sigma-delta converter can be an integral part of the controller (8). To achieve compactness, the sigma-delta converter and the controller (8) can be arranged on the same system-on-a-chip.

To arrive at a dynamic setting for thermal energy exchange, the controller (8) determines a temperature drop $\Delta T_{io}$ between the temperature $T_i$ at or near the inlet port (2) and the temperature $T_o$ at or near the outlet port (3):

$$\Delta T_{io} = T_i - T_o$$

In a special embodiment, the controller (8) calculates the temperature drop $\Delta T_{io}$.

The temperature drop $\Delta T_{io}$ is then multiplied with a flow rate $\varphi$ to arrive at an instantaneous rate P of thermal energy exchange:

$$P = \Delta T_{io} \cdot \varphi$$

In a special embodiment, the controller (8) calculates the instantaneous rate P. In an embodiment, the instantaneous rate $P$ is an instantaneous rate of cooling power and/or of heating power.

According to an aspect of the present disclosure, the controller (8) iteratively records signals indicative of

- an instantaneous temperature $T_i$ at or near the inlet port (2),
- an instantaneous temperature $T_o$ at or near the outlet port (3),
- an instantaneous flow rate $\varphi$ along the fluid path.

The controller (8) can then process these signals to obtain instantaneous values of

- the temperature $T_i$ at or near the inlet port (2),
- the instantaneous temperature $T_o$ at or near the outlet port (3),
- the instantaneous flow rate $\varphi$ along the fluid path.

The controller (8) then determines instantaneous rates $P$ of thermal energy exchange as explained above. The controller (8) advantageously determines instantaneous rates of cooling power and/or of heating power.

The instantaneous rate $P$ of thermal energy exchange preferably is an instantaneous rate $P$ of thermal energy exchange by the at least one thermal energy exchanger (4). The instantaneous rate $P$ of cooling power preferably is an instantaneous rate $P$ of cooling power via the at least one thermal energy exchanger (4). The instantaneous rate $P$ of heating power preferably is an instantaneous rate $P$ of heating power via the at least one thermal energy exchanger (4).

In a special embodiment, the controller (8) calculates instantaneous rates $P$ of thermal energy exchange as explained above. The controller (8) advantageously calculates instantaneous rates of cooling power and/or of heating power. The controller (8) iterates these steps to arrive at a time series of rates $P$ of thermal energy exchange. The controller (8) advantageously iterates these steps to arrive at a time series of rates $P$ of cooling power and/or of heating power. It is envisaged that the controller (8) iterates these steps to arrive at a time series of instantaneous rates $P$ of thermal energy exchange. It is still envisaged that the controller (8) iterates these steps to arrive at a time series of instantaneous rates $P$ of cooling power and/or of heating power.

According to another aspect of the present disclosure, the controller (8) iteratively records signals indicative of

- an instantaneous supply temperature $T_s$,
- an instantaneous return temperature $T_r$,
- an instantaneous flow rate $\varphi$ along the fluid path.

The controller (8) can then process these signals to obtain instantaneous values of

- the instantaneous supply temperature $T_s$,
- the instantaneous return temperature $T_r$,
- the instantaneous flow rate $\varphi$ along the fluid path.

When these values have become available, the controller (8) determines a temperature drop

$$\Delta T_{sr} = T_s - T_r$$

and an instantaneous rate $P$ of thermal energy exchange:

$$P = \Delta T_{sr} \cdot \varphi$$

In a special embodiment, the controller (8) calculates a temperature drop

$$\Delta T_{sr} = T_s - T_r$$

and an instantaneous rate $P$ of thermal energy exchange:

$$P = \Delta T_{sr} \cdot \varphi$$

The instantaneous rate $P$ of thermal energy exchange preferably is an instantaneous rate $P$ of thermal energy exchange by the at least one thermal energy exchanger (4).

The controller (8) iterates these steps to arrive at a time series of rates $P$ of thermal energy exchange. The controller (8) advantageously iterates these steps to arrive at a time series of rates $P$ of cooling power and/or of heating power. It is envisaged that the controller (8) iterates these steps to arrive at a time series of instantaneous rates $P$ of thermal energy exchange. It is still envisaged that the controller (8) iterates these steps to arrive at a time series of instantaneous rates $P$ of cooling power and/or of heating power.

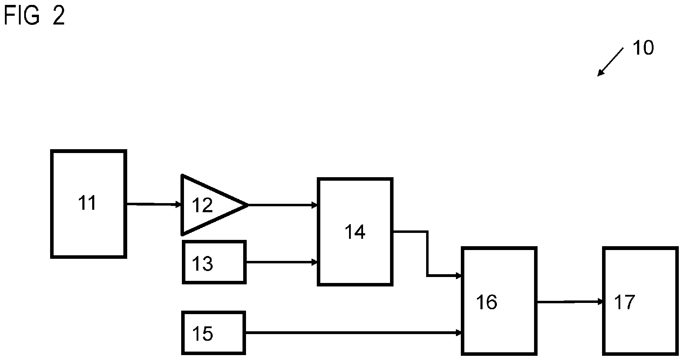

The controller (8) can implement an algorithm as illustrated in FIG 2. A moving average filter (11) filters rates of thermal energy exchange and/or signals indicative of rates of thermal energy exchange. The moving average filter (11) can, by way of non-limiting example, comprise an hourly moving average filter. The moving average filter (11) can, by way of another non-limiting example, be an hourly moving average filter.

According to an aspect of the present disclosure, the moving average filter (11) comprises an analog circuit and that analog circuit is part of the controller (8). According to another aspect of the present disclosure, the moving average filter (11) comprises a digital circuit and that digital circuit is part of the controller (8). According to a special aspect of the present disclosure, the moving average filter (11) is an analog and/or a digital circuit comprised by the controller (8).

The signals indicative of thermal energy exchange $P$ can be obtained via as explained above. Also, time series of signals indicative of thermal energy exchange P can be obtained by iteratively recording temperatures such as $T_i$, $T_o$, $T_s$, $T_r$ and flow rates $\varphi$. The recorded signals are then processed, and signals indicative of thermal energy exchange $P$ are iteratively determined as set out above. In a special embodiment, signals indicative of thermal energy exchange $P$ are iteratively calculated as set out above.

Rates indicative of thermal energy exchange $P$ can also be obtained via as explained above. Time series of rates indicative of thermal energy exchange $P$ can be obtained by iteratively recording temperatures such as $T_i$, $T_o$, $T_s$, $T_r$ and flow rates $\varphi$. The recorded signals are then processed and rates indicative of thermal energy exchange $P$ are iteratively determined as set out above. In a special embodiment, rates indicative of thermal energy exchange $P$ are iteratively calculated as set out above.

The moving average filter (11) feeds its output signals to an optional multiplier (12). The optional multiplier (12) multiplies the signals produced by the moving average filter (11) with a scale factor such as two or four or ten.

According to an aspect of the present disclosure, the optional multiplier (12) comprises an analog circuit and that analog circuit is part of the controller (8). According to another aspect of the present disclosure, the optional multiplier (12) comprises a digital circuit and that digital circuit is part of the controller (8). According to a special aspect of the present disclosure, the optional multiplier (12) is an analog and/or a digital circuit comprised by the controller (8).

It is envisaged that the moving average filter (11) produces digital measures and feeds the digital measures to an optional multiplier (12). The optional multiplier (12) receives the signals from the moving average filter (11). The optional multiplier (12) multiplies the signals produced by the moving average filter (11) with a scale factor such as two or four or ten.

A first threshold filter (14) is then applied to the signals originating from the moving average filter (11) and/or from the optional multiplier (12). The first threshold filter (14) compares signals originating from the moving average filter (11) and/or from the optional multiplier (12) to a first threshold value (13). The first threshold filter (14) replaces signals that are less than a first threshold value (13) with that first threshold value (13).

According to an aspect of the present disclosure, the first threshold filter (14) comprises an analog circuit and that analog circuit is part of the controller (8). According to another aspect of the present disclosure, the first threshold filter (14) comprises a digital circuit and that digital circuit is part of the controller (8). According to a special aspect of the present disclosure, the first threshold filter (14) is an analog and/or a digital circuit comprised by the controller (8).

It is envisaged that the moving average filter (11) and/or the optional multiplier (12) produce digital measures. These digital measures are forwarded to the first threshold filter (14). The first threshold filter (14) compares digital measures originating from the moving average filter (11) and/or from the optional multiplier (12) to a first threshold value (13). The first threshold filter (14) replaces digital measures that are less than a first threshold value (13) with that first threshold value (13).

A second threshold filter (16) is then applied to the signals originating from the moving average filter (11) and/or from the optional multiplier (12) and/or from the first threshold filter (14). The second threshold filter (16) compares signals to a second threshold value (15). The signals compared by the second threshold filter (16) can originate from at least one of:

- the (moving) average filter (11),
- the optional multiplier (12)
- the first threshold filter (14).

The second threshold filter (16) replaces signals that are greater than the second threshold value (15) with that second threshold value (15).

According to an aspect of the present disclosure, the second threshold filter (16) comprises an analog circuit and that analog circuit is part of the controller (8). According to another aspect of the present disclosure, the second threshold filter (16) comprises a digital circuit and that digital circuit is part of the controller (8). According to a special aspect of the present disclosure, the second threshold filter (16) is an analog and/or a digital circuit comprised by the controller (8).

It is envisaged that the moving average filter (11) and/or the optional multiplier (12) and/or the first threshold filter (14) produce digital measures. These digital measures are forwarded to the second threshold filter (16). The second threshold filter (16) compares digital measures originating from the moving average filter (11) and/or from the optional multiplier (12) to a second threshold value (15). The second threshold filter (16) replaces digital measures that are greater than a second threshold value (15) with that second threshold value (15).

It is worth stressing that the sequence of the first and second threshold filters (14, 16) can be altered. That is, the second threshold filters (16) can, in principle, be applied before the first threshold filter (14). The second threshold filter (16) then receives signals and/or digital measures from the moving average filter (11). The second threshold filter (16) can also receive signals and/or digital measures from the optional multiplier (12). In this embodiment, the second threshold filter (16) forwards its output to the first threshold filter (14).

A maximum filter (17) such as a moving maximum filter (17) is eventually employed to produce a maximum thermal energy exchange. The maximum filter (17) returns the largest of its input signals over a given time span such as twenty-four hours.

According to an aspect of the present disclosure, the maximum filter (17) comprises an analog circuit and that analog circuit is part of the controller (8). According to another aspect of the present disclosure, the maximum filter (17) comprises a digital circuit and that digital circuit is part of the controller (8). According to a special aspect of the present disclosure, the maximum filter (17) is an analog and/or a digital circuit comprised by the controller (8).

According to an aspect of the present disclosure, the moving maximum filter (17) comprises an analog circuit and that analog circuit is part of the controller (8). According to another aspect of the present disclosure, the moving maximum filter (17) comprises a digital circuit and that digital circuit is part of the controller (8). According to a special aspect of the present disclosure, the moving maximum filter (17) is an analog and/or a digital circuit comprised by the controller (8).

It is envisaged that the second threshold filter (16) produces digital measures. These digital measures are forwarded to the maximum filter (17). The maximum filter (17) collects digital measures over a given time span such as twenty-four hours. The maximum filter (17) compares the collected measures to one another. Based on the comparison(s), the maximum filter (17) selects the greatest rate among the collected rates and outputs that greatest rate.

It is still envisaged that the second threshold filter (16) produces digital measures. These digital measures are forwarded to a moving maximum filter (17). The moving maximum filter (17) collects digital measures over a given time span such as twenty-four hours. The moving maximum filter (17) compares the collected measures to one another. Based on the comparison(s), the moving maximum filter (17) selects the greatest rate among the collected rates and outputs that greatest rate.

That way, the maximum filter (17) can produce a signal indicative of maximum thermal energy exchange. It is envisaged that a moving maximum filter (17) produces a signal indicative of maximum thermal energy exchange. The controller (8) uses the signal indicative of maximum thermal energy exchange and limits thermal energy exchange via the assembly (1). More specifically, the controller (8) uses the signal indicative of maximum thermal energy exchange and limits thermal energy exchange by the at least one thermal energy exchanger (4). To that end, the controller (8) limits the input signal (9) to that signal indicative of maximum thermal energy exchange.

In operation, the controller (8) records temperatures such as $T_i$, $T_o$, $T_s$, $T_r$ and flow rates $\varphi$. The recorded signals are then processed, and an operational signal indicative of thermal energy exchange is determined as set out above. More specifically, an operational signal indicative of thermal energy exchange by the at least one thermal energy exchanger (4) can be determined as set out above. In a special embodiment, the recorded signals are processed, and an operational signal indicative of thermal energy exchange is calculated as set out above. More specifically, an operational signal indicative of thermal energy exchange by the at least one thermal energy exchanger (4) can be calculated as set out above.

The controller (8) compares the operational signal indicative of thermal energy exchange to the produced signal indicative of maximum thermal energy exchange. If the operational signal indicative of thermal energy exchange is greater than the produced signal indicative of maximum thermal energy exchange, a limitation signal will be produced. The limitation signal will be sent from the controller (8) to the actuator (7). The limitation signal causes the actuator (7) to limit flow along the fluid path. More specifically, the limitation signal can cause the actuator (7) to move the valve member (6) such that flow along the fluid path will be limited.

In an embodiment, the maximum filter (17) can produce a digital measure indicative of maximum rate of thermal energy exchange. It is envisaged that a moving maximum filter (17) produces a digital measure indicative of a maximum rate of thermal energy exchange. The controller (8) uses the digital measure indicative of the maximum rate of thermal energy exchange and limits thermal energy exchange via the assembly (1). To that end, the controller (8) can limit the input signal (9). The controller (8) preferably uses the digital measure indicative of the maximum rate of thermal energy exchange. The controller (8) preferably uses this digital measure and limits the rate of thermal energy exchange by the at least one thermal energy exchanger (4). To that end, the controller (8) can limit the input signal (9).

In operation, the controller (8) records temperatures such as $T_i$, $T_o$, $T_s$, $T_r$ and flow rates $\varphi$. The recorded signals are then processed and an operational measure indicative of a rate of thermal energy exchange is determined as set out above. In a special embodiment, the recorded signals are processed and an operational measure indicative of the rate of thermal energy exchange is calculated as set out above.

The controller (8) compares the operational measure indicative of the rate of thermal energy exchange to the produced measure indicative of the maximum rate of thermal energy exchange. If the operational measure indicative of the rate of thermal energy exchange is greater than the produced measure indicative of the maximum rate of thermal energy exchange, a limitation signal will be produced. The limitation signal will be sent from the controller (8) to the actuator (7). The limitation signal causes the actuator (7) to limit flow along the fluid path. More specifically, the limitation signal can cause the actuator (7) to move the valve member (6) such that flow along the fluid path will be limited.

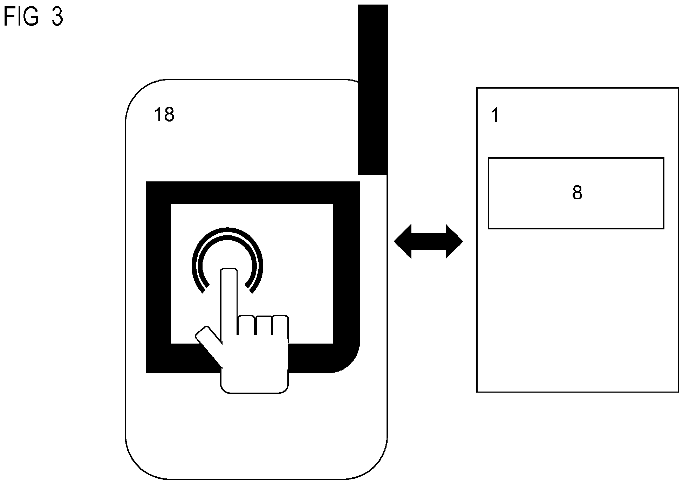

FIG 3 shows the controller (8) in communication with a mobile handheld device (18). The mobile handheld device (18) can, by way of non-limiting example, comprise a phone and/or a tablet computer. The mobile handheld device (18) preferably communicates with the controller (8) using a wireless communication bus such as a radio-frequent communication bus. The wireless communication bus can involve phase-shift keying and/or redundant data transmission. Phase-shift keying and/or redundant data transmission afford transmission of radio-frequent signals between the controller (8) and the mobile handheld device (18). Phase-shift keying and/or redundant data transmission are advantageous in case of long distances between the two devices (8, 18). Phase-shift keying and/or redundant data transmission can still be advantageous in case of attenuation caused by concrete walls or similar.

The mobile handheld device (18) can be used to set a variable such as a filter variable and/or a process variable of the algorithm depicted in FIG 2. The variable can, by way of non-limiting example, comprise a time constant and/or a window size of one of the filters (11, 17). The variable can also be a time constant and/or a window size of one of the filters (11, 17). The variable can, by way of another non-limiting example, comprise an upper limit or a lower limit to be factored in by one of the threshold filters (14, 16). The variable set by the mobile handheld device (18) can also be an upper limit or a lower limit. The variable is then factored in by one of the threshold filters (14, 16). More specifically, the variable can comprise a first threshold value (13) and/or a second threshold value (15). The variable can still be a first threshold value (13) and/or a second threshold value (15).

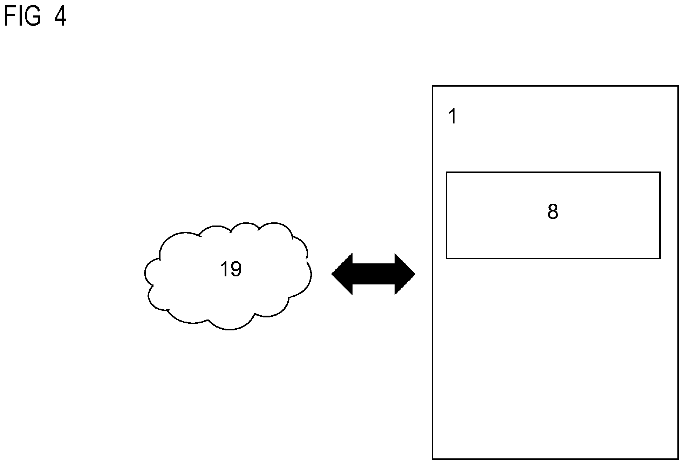

FIG 4 shows the controller (8) in communication with a remote controller (19). The remote controller (19) can, by way of non-limiting example, comprise a cloud computer and/or a server computer. The remote controller (19) preferably communicates with the controller (8) using a communication bus such as a radio-frequent communication bus. The radio-frequent communication bus can involve phase-shift keying and/or redundant data transmission. Phase-shift keying and/or redundant data transmission afford transmission of radio-frequent signals between the controller (8) and the remote controller (19). Phase-shift keying and/or redundant data transmission are advantageous in case of long distances between the two devices (8, 19). Phase-shift keying and/or redundant data transmission can still be advantageous in case of attenuation caused by concrete walls or similar.

The remote controller (19) can be used to set a variable such as a filter variable and/or a process variable of the algorithm depicted in FIG 2. The variable can, by way of non-limiting example, comprise a time constant and/or a window size of one of the filters (11, 17). The variable can also be a time constant and/or a window size of one of the filters (11, 17). The variable can, by way of another non-limiting example, comprise an upper limit or a lower limit to be factored in by one of the threshold filters (14, 16). The variable set by the remote controller (19) can also be an upper limit or a lower limit to be factored in by one of the threshold filters (14, 16). More specifically, the variable can comprise a first threshold value (13) and/or a second threshold value (15). The variable can still be a first threshold value (13) and/or a second threshold value (15).

The remote controller (19) can also perform part of the control algorithm as illustrated in FIG 2. In an embodiment, the controller (8) samples readings from the pair of temperature sensors (5a, 5b) and transmits these temperature readings to the remote controller (19). The controller (8) can also sample readings indicative of flow rate $\varphi$ and transmits these flow readings to the remote controller (19).

The remote controller (19) performs the steps of the algorithm illustrated in FIG 2. The remote controller (19) afterwards transmits a signal and/or a measure indicative of the maximum rate of thermal energy exchange back to the controller (8). The controller (8) then uses the signal and/or the measure indicative of the maximum rate of thermal energy exchange to limit thermal energy exchange via the assembly (1). In an embodiment, the controller (8) uses the signal and/or the measure indicative of the maximum rate of thermal energy exchange. The controller (8) uses this signal and/or this measure to limit thermal energy exchange by the at least one thermal energy exchanger (4).

More specifically, the controller (8) uses the signal and/or the measure indicative of the maximum rate of thermal energy exchange to produce a limitation signal. The limitation signal is received by the actuator (7) and causes the actuator (7) to move the valve member (6). Flow along the fluid path is then limited as a result of the movement of the valve member (6).

In an alternate embodiment, the controller (8) processes the signals sampled from the pair of temperature sensors (5a, 5b). In so doing, the controller (8) produces digital measures of temperatures $T_i$, $T_o$, $T_s$, $T_r$. The controller (8) also processes the signals sampled (ultrasonic) flow sensor. In so doing, the controller (8) produces digital measures of flow rates $\varphi$.

The measures of temperatures $T_i$, $T_o$, $T_s$, $T_r$ and the flow rates $\varphi$ are then transferred to the remote controller (19). The algorithm as described in then notes on FIG 2 is carried out using these measures.

As described in detail herein, the present disclosure deals with a method of limiting a rate of thermal energy exchange via at least one thermal energy exchanger (4) of an assembly (1), the assembly (1) comprising a pair of temperature sensors (5a, 5b) and a flow sensor and the at least one thermal energy exchanger (4) and a valve member (6) in fluid communication with the at least one thermal energy exchanger (4) and an actuator (7) coupled to the valve member (6), the method comprising the steps of:

reading a first time series of signals from the pair of temperature sensors (5a, 5b);

reading a second time series of signals from the flow sensor;

determining a third time series of rates of thermal energy exchange by the at least one thermal energy exchanger (4) based on the first and the second time series;

producing an averaged series of rates by determining a plurality of moving averages of the third time series;

producing a first bounded series of rates by replacing rates of the averaged series that are less than a lower threshold (13) with rates that equal the lower threshold (13);

producing a second bounded series of rates by replacing rates of the first bounded series that are greater than an upper threshold (15) with rates that equal the upper threshold (15);

determining a maximum rate of thermal energy exchange by applying a maximum filter (17) to the second bounded series, the maximum filter (17) returning the greatest rate of the second bounded series;

reading a set point signal (9) indicative of a rate of exchange of thermal energy by the at least one thermal energy exchanger (4);

using the maximum rate to limit the set point signal (9);

producing a limitation signal from the limited set point signal; and

transmitting the limitation signal to the actuator (7), the limitation signal causing the

actuator (7) to limit a position of the valve member (6).

The instant disclosure also deals with a method of limiting a rate of exchange of thermal energy via at least one thermal energy exchanger (4) of an assembly (1), the assembly (1) comprising an inlet port (2), an outlet port (3), a fluid path extending between the inlet port (2) and the outlet port (3), a pair of temperature sensors (5a, 5b), a flow sensor for recording a flow rate along the fluid path, the at least one thermal energy exchanger (4) and a valve member (6) in fluid communication with the at least one thermal energy exchanger (4) and an actuator (7) coupled to the valve member (6), the pair of sensors (5a, 5b) comprising a first sensor (5a) for recording a temperature at or near the inlet port (2) and a second sensor (5b) for recording a temperature at or near the outlet port (3), the valve member (6) being selectively movable between a closed position which closes the fluid path between the inlet port (2) and the outlet port (3), and an open position which opens the fluid path between the inlet port (2) and the outlet port (3), the method comprising the steps of:

reading a first time series of signals from the pair of temperature sensors (5a, 5b);

determining a time series of temperature drops $\Delta T_{io}$, $\Delta T_{sr}$ based on the first time series of signals;

reading a second time series of signals from the flow sensor;

determining a time series of flow rates $\varphi$ based on the second time series of signals;

determining a third time series of rates of thermal energy exchange by the at least one thermal energy exchanger (4) as a function of the time series of temperature drops $\Delta T_{io}$, $\Delta T_{sr}$ and as a function of the time series of flow rates $\varphi$;

producing an averaged series of rates by determining a plurality of moving averages of the third time series;

producing a first bounded series of rates by replacing rates of the averaged series that are less than a lower threshold (13) with rates that equal the lower threshold (13);

producing a second bounded series of rates by replacing rates of the first bounded series that are greater than an upper threshold (15) with rates that equal the upper threshold (15);

determining a maximum rate of thermal energy exchange by applying a maximum filter (17) to the second bounded series, the maximum filter (17) returning the greatest rate of the second bounded series;

reading a set point signal (9) indicative of a rate of exchange of thermal energy by the at least one thermal energy exchanger (4);

using the maximum rate to limit the set point signal (9);

producing a limitation signal from the limited set point signal (9); and

transmitting the limitation signal to the actuator (7), the limitation signal causing the

actuator (7) to limit the position of the valve member (6).

The instant disclosure also pertains to any of the aforementioned methods, the method comprising the step:

determining the third time series of rates of thermal energy exchange by the at least one thermal energy exchanger (4) by multiplying temperature drops $\Delta T_{io}$, $\Delta T_{sr}$ of the time series of temperature drops $\Delta T_{io}$, $\Delta T_{sr}$ with flow rates $\varphi$ of the time series of flow rates $\varphi$.

In an embodiment, a controller (8) as disclosed hereinafter is used to produce a limitation signal from the limited set point signal.

The present disclosure also applies to any of the aforementioned methods, wherein the assembly (1) comprises the flow sensor in operative communication with the fluid path and the pair of temperature sensors (5a, 5b), the pair of temperature sensors (5a, 5b) comprising a first sensor (5a) in operative communication with the fluid path and arranged at or near the inlet port (2), the pair of temperature sensors (5a, 5b) comprising a second sensor (5b) in operative communication with the fluid path and arranged at or near the outlet port (3).

The instant disclosure also deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6), the method comprising the steps of:

reading a first time series of temperature signals from the pair of temperature sensors (5a, 5b); and

reading a second time series of flow signals from the flow sensor.

The present disclosure further deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

wherein the assembly (1) additionally comprises an analog-to-digital converter such as an analog-to-digital converter of a controller (8) and/or an analog-to-digital converter of a microcontroller (8) and/or an analog-to-digital converter of a microprocessor (8); wherein the method comprises the steps of:

employing the analog-to-digital converter to convert the first time series of signals into a first time series of temperatures $T_i$, $T_o$, $T_r$, $T_s$; and

employing the analog-to-digital converter to convert the second time series of signals into a second time series of flow rates $\varphi$.

It is envisaged that the controller (8) is or comprises a local controller (8). The local controller (8) is local at the assembly (1). By contrast, a remote controller (19) is not local at the assembly (1). The remote controller (19) can, by way of non-limiting example, be arranged at a distance of at least ten metres or at least one hundred metres or even at least one kilometre from the assembly (1).

The instant disclosure still further deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

> wherein the assembly (1) additionally comprises a delta-sigma modulation circuit such as a delta-sigma modulation circuit of a controller (8) and/or a delta-sigma modulation circuit of a microcontroller (8) and/or a delta-sigma modulation circuit of a microprocessor (8);
> wherein the method comprises the steps of:
>
>> employing the delta-sigma modulation circuit to convert the first time series of signals into a first time series of temperatures $T_i$, $T_o$, $T_r$, $T_s$; and
>> employing the delta-sigma modulation circuit to convert the second time series of signals into a second time series of flow rates $\varphi$.

The instant disclosure also deals with any of the aforementioned methods involving an analog-to-digital converter and/or a delta-sigma modulation circuit, the method comprising the steps of:

> determining a time series of temperature drops $\Delta T_{io}$, $\Delta T_{sr}$ based on the first time series by calculating differences between first temperatures $T_i$, $T_s$ obtained from (temperature) signals originating from a first sensor (5a) of the pair of temperature sensors (5a, 5b) and second temperatures $T_o$, $T_r$ obtained from (temperature) signals originating from a second sensor (5b) of the pair of temperature sensors (5a, 5b); and
> determining a third time series of rates of thermal energy exchange by multiplying temperature drops $\Delta T_{io}$, $\Delta T_{sr}$ of the time series of temperature drops $\Delta T_{io}$, $\Delta T_{sr}$ with flow rates $\varphi$ of the second time series of flow rates $\varphi$.

In an embodiment, temperature drops $\Delta T_{io}$, $\Delta T_{sr}$ of the time series of temperature drops $\Delta T_{io}$, $\Delta T_{sr}$ are multiplied with flow rates $\varphi$ of the second time series of flow rates $\varphi$, wherein the temperature drops $\Delta T_{io}$, $\Delta T_{sr}$ and the flow rates $\varphi$ have the same or similar timestamps.

The present disclosure yet further deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6), wherein the method comprises the step of:
producing an averaged series of rates by applying a moving average filter (11) to the third time series, the moving average filter (11) determining a plurality of subsets of the third time series and calculating an arithmetic average for each subset of the plurality of subsets. It is envisaged that the moving average filter (11) determines a plurality of subsets of the third time series, each subset of the plurality of subsets being at least thirty minutes long and/or at least one hour long and/or at least two hours long. That is, the moving average filter (11) has a window size of at least thirty minutes or of at least one hour or of at least two hours.

It is envisaged that the arithmetic average is an arithmetic mean.

The instant disclosure also deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

> wherein the assembly (1) additionally comprises a moving average filter (11) such as a moving average filter (11) of a controller (8) and/or a moving average filter (11) of a microcontroller (8) and/or a moving average filter (11) of a microprocessor (8); and
> wherein the method comprises the step of:
> producing an averaged series of rates by applying the moving average filter (11) to the third time series, the moving average filter (11) determining a plurality of subsets of the third time series and calculating an arithmetic average for each subset of the plurality of subsets. It is envisaged that the moving average filter (11) determines a plurality of subsets of the third time series, each subset being at least thirty minutes long and/or at least one hour long and/or at least two hours long. That is, the moving average filter (11) has a window size of at least thirty minutes or of at least one hour or of at least two hours.

It is envisaged that the arithmetic average is an arithmetic mean.

The present disclosure further deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6), wherein the method comprises the step of:

producing an averaged series of rates by applying a moving average filter (11) to the third time series, the moving average filter (11) determining a plurality of subsets of the third time series and calculating a geometric average for each subset of the plurality of subsets. It is envisaged that the moving average filter (11) determines a plurality of subsets of the third time series, each subset being at least thirty minutes long and/or at least one hour long and/or at least two hours long. That is, the moving average filter (11) has a window size of at least thirty minutes or of at least one hour or of at least two hours.

It is envisaged that the geometric average is a geometric mean.

The instant disclosure still further deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

wherein the assembly (1) additionally comprises a moving average filter (11) such as a moving average filter (11) of a controller (8) and/or a moving average filter of a microcontroller (8) and/or a moving average filter (11) of a microprocessor (8); and
wherein the method comprises the step of:
producing an averaged series of rates by applying the moving average filter (11) to the third time series, the moving average filter (11) determining a plurality of subsets of the third time series and calculating a geometric average for each subset of the plurality of subsets. It is envisaged that the moving average filter (11) determines a plurality of subsets of the third time series, each subset being at least thirty minutes long and/or at least one hour long and/or at least two hours long. That is, the moving average filter (11) has a window size of at least thirty minutes or of at least one hour or of at least two hours.

It is envisaged that the geometric average is a geometric mean.

It is envisaged that the set point signal (9) is indicative of a rate of exchange of thermal energy by the at least one thermal energy exchanger (4) in accordance with a set point.

According to another aspect of the present disclosure, a rate of exchange of thermal energy by the at least one thermal energy exchanger (4) is limited in accordance with the following steps:

reading an operational signal indicative of a temperature drop $\Delta T_{io}$, $\Delta T_{sr}$ from the pair of temperature sensors (5a, 5b);
reading an operational signal indicative of a flow rate $\varphi$ from the flow sensor;
determining an operational rate of thermal energy exchange based on the operational signal indicative of the temperature drop $\Delta T_{io}$, $\Delta T_{sr}$ and based on the operational signal indicative of the flow rate $\varphi$;
comparing the operational rate to the maximum rate;
if the operational rate is greater than the maximum rate:

producing the limitation signal based on the maximum rate; and
transmitting the limitation signal to the actuator (7), the limitation signal causing the
actuator (7) to limit the position of the valve member (6).

The operational signal indicative of a temperature drop $\Delta T_{io}$, $\Delta T_{sr}$ is ideally not comprised by the first time series of signals. Likewise, the operational signal indicative of a flow rate $\varphi$ is ideally not comprised by the second time series of signals. Likewise, the operational rate of energy exchange is ideally not comprised by the third time series.

The instant disclosure also deals with any of the methods of limiting the rate of exchange of thermal energy by at least one thermal energy exchanger (4) of the assembly (1) as described above, the method comprising the step of:
changing the third time series by using a multiplier (12) to multiply each rate of thermal energy exchange of the third time series with a scale factor.

In an embodiment, the scale factor is a predetermined scale factor. The scale factor advantageously is the same for all rates of the third time series.

The present disclosure deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

wherein the assembly (1) additionally comprises a multiplier (12) such as a multiplier (12) of a controller (8) and/or a multiplier (12) of a microcontroller (8) and/or a multiplier (12) of a microprocessor (8);
the method comprising the steps of:

the multiplier (12) reading the third time series; and

the multiplier (12) adjusting and/or changing each rate of the third time series by multiplying each rate with a scale factor.

The present disclosure deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

wherein the assembly (1) additionally comprises a multiplier (12) such as a multiplier (12) of a controller (8) and/or a multiplier (12) of a microcontroller (8) and/or a multiplier (12) of a microprocessor (8); the method comprising the steps of:

the multiplier (12) reading the third time series; the multiplier (12) adjusting and/or changing each rate of the third time series by multiplying each rate with a scale factor; and after multiplication, the multiplier (12) returning the third time series.

It is envisaged that the multiplier (12) returns an adjusted and/or a changed third time series. It is also envisaged that the adjusted and/or changed third time series thereafter becomes the basis for subsequent filtering.

The instant disclosure yet further deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

wherein the assembly (1) additionally comprises a first threshold filter (14) such as a first threshold filter (14) of a controller (8) and/or a first threshold filter (14) of a microcontroller (8) and/or a first threshold filter (14) of a microprocessor (8); wherein the method comprises the steps of:

the first threshold filter (14) producing a first set of selected rates by selecting all rates of the averaged series that are less than the lower threshold (13); and the first threshold filter (14) replacing each rate of the first set with a rate that equals the lower threshold (13).

It is envisaged that the first threshold filter (14) is or comprises a less than filter. The less than filter replaces any rate below the lower threshold (13) with a rate that equals the lower threshold (13).

The instant disclosure also deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

wherein the assembly (1) additionally comprises a second threshold filter (16) such as a second threshold filter (16) of a controller (8) and/or a second threshold filter (16) of a microcontroller (8) and/or a second threshold filter (16) of a microprocessor (8); wherein the method comprises the steps of:

the second threshold filter (16) producing a second set of selected rates by selecting all rates of the first bounded series that are greater than the upper threshold (15); and the second threshold filter (16) replacing each rate of the second set with a rate that equals the upper threshold (15).

It is envisaged that the second threshold filter (16) is or comprises a greater than filter. The greater than filter replaces any rate above the upper threshold (15) with a rate that equals the upper threshold (15).

The present disclosure still deals with any of the methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) and the actuator (7) coupled to the valve member (6) as described herein, wherein the method comprises the steps of:

producing the maximum rate by applying the maximum filter (17) to the second bounded series, the maximum filter (17) reading the second bounded series, the maximum filter (17) determining a subset of the second bounded series, and the maximum filter (17) returning the greatest rate of the subset of the second bounded series. It is envisaged that the maximum filter (17) determines a subset of the second bounded series, the subset of the second bounded series being at least twelve hours long or being at least twenty-four hours long or being at least forty-eight hours long. That is, the maximum filter (17) has a window size of at least twelve hours or of at least twenty-four hours or of at least forty-eight hours.

The present disclosure further deals with any of the methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) and the actuator (7) coupled to the valve member (6) as described herein,

wherein the assembly (1) additionally comprises a maximum filter (17) such as a maximum filter (17) of a controller (8) and/or a maximum filter (17) of a microcontroller (8) and/or a maximum filter (17) of a microprocessor (8);
wherein the method comprises the steps of:

determining the maximum rate by applying the maximum filter (17) to the second bounded series,
the maximum filter (17) reading the second bounded series,
the maximum filter (17) determining a subset of the second bounded series, and
the maximum filter (17) returning the greatest rate of the subset of the second bounded series. It is envisaged that the maximum filter (17) determines a subset of the second bounded series, the subset of the second bounded series being at least twelve hours long or being at least twenty-four hours long or being at least forty-eight hours long. That is, the maximum filter (17) has a window size of at least twelve hours or of at least twenty-four hours or of at least forty-eight hours.

The instant disclosure still further deals with any of the methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) and the actuator (7) coupled to the valve member (6) as described herein,
wherein the method comprises the step of:
applying the maximum rate as a maximum setting to the assembly (1) such that the assembly (1) limits the rate of exchange of thermal energy by the at least one thermal energy exchanger (4) of the assembly (1) to the maximum rate.

According to an aspect of the present disclosure, the actuator (7) of the assembly (1) and the valve member (6) of the assembly (1) limit the rate of exchange of thermal energy by the at least one thermal energy exchanger (4) of the assembly (1) to the maximum rate.

The instant disclosure still further deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

wherein the assembly (1) additionally comprises a controller (8) such as a microcontroller (8) and/or a microprocessor (8) and/or an application-specific integrated circuit and/or a freely programmable gate array; and
wherein the method comprises the step of:
the controller (8) reading the set point signal (9) indicative of the rate of exchange of thermal energy.

The present disclosure also deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

wherein the assembly (1) additionally comprises a controller (8) such as a microcontroller (8) and/or a microprocessor (8) and/or an application-specific integrated circuit and/or a freely programmable gate array; and
wherein the method comprises the step of:
the controller (8) using the maximum rate to limit the set point signal (9) such that the limited set point signal (9) indicates a rate of exchange of thermal energy that is less than or equal to the maximum rate.

The instant disclosure further deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6), wherein the method comprises the steps of:

determining a maximum signal from the maximum rate;
comparing the set point signal (9) to the determined maximum signal; and
if the maximum signal is greater than the set point signal (9), limiting the set point signal (9) to the maximum signal.

The instant disclosure further deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

wherein the assembly (1) additionally comprises a controller (8) such as a microcontroller (8) and/or a microprocessor (8) and/or an application-specific integrated circuit and/or a freely programmable gate array;
wherein the method comprises the steps of:

the controller (8) determining a maximum signal from the maximum rate;
the controller (8) comparing the set point signal (9) to the determined maximum signal; and
if the maximum signal is greater than the set point signal (9), the controller (8) limiting the set point signal (9) to the maximum signal.

The present disclosure still further deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6), wherein the method comprises the steps of:

determining a maximum signal from the maximum rate;
comparing the set point signal (9) to the determined maximum signal; and
if the maximum signal is greater than the set point signal (9), replacing the set point signal (9) with the maximum signal.

The instant disclosure yet further deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

wherein the assembly (1) additionally comprises a controller (8) such as a microcontroller (8) and/or a microprocessor (8) and/or an application-specific integrated circuit and/or a freely programmable gate array;
wherein the method comprises the steps of:

the controller (8) determining a maximum signal from the maximum rate;
the controller (8) comparing the set point signal (9) to the determined maximum signal; and
if the maximum signal is greater than the set point signal (9), the controller (8) replacing the set point signal (9) with the maximum signal.

The present disclosure also deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

wherein the assembly (1) additionally comprises a digital-to-analog converter such as a digital-to-analog converter of a controller (8) and/or a digital-to-analog converter of a microcontroller (8) and/or a digital-to-analog converter of a microprocessor (8);
wherein the method comprises the step of:
employing the digital-to-analog converter to convert the limited set point signal into the limitation signal.

The present disclosure further deals with any of the methods of limiting the rate of exchange of thermal energy by at least one thermal energy exchanger (4) of the assembly (1) as described above, the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6), the method comprising the steps of:

connecting to a mobile handheld device (18);
receiving a mobile application signal from the mobile handheld device (18) using a digital communication protocol;
setting at least one variable as a function of the mobile application signal, the at least one variable being selected from:

- a window size for a or for the moving average filter (11),
- a lower threshold value (13),
- an upper threshold value (15),
- a window size for a or for the maximum filter (17),

after setting the at least one variable:

reading the first time series of signals from the pair of temperature sensors (5a, 5b);
reading the second time series of signals from the flow sensor;

determining the third time series of rates of thermal energy exchange by the at least one thermal energy exchanger (4) based on the first and the second time series;
determining the averaged series of rates by applying the moving average filter (11) to the third time series, the moving average filter (11) determining a plurality of subsets of the third time series and calculating an arithmetic average for each subset of the plurality of subsets, each subset of the plurality of subsets being at least as long as the window size for the moving average filter (11);
producing the first bounded series of rates by replacing rates of the averaged series that are less than the lower threshold value (13) with rates that equal the lower threshold value (13);
producing the second bounded series of rates by replacing rates of the first bounded series that are greater than the upper threshold value (15) with rates that equal the upper threshold value (15);
determining the maximum rate of thermal energy exchange by applying the maximum filter (17) to the second bounded series;
the maximum filter (17) determining a subset of the second bounded series; and
the maximum filter (17) returning the greatest rate of the subset of the second bounded series, the subset of the second bounded series being at least as long as the window size for the maximum filter (17).

The present disclosure also deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6), the method comprising the steps of:

connecting to a mobile handheld device (18);
receiving a mobile application signal from the mobile handheld device (18) using a digital communication protocol;
changing at least one variable as a function of the mobile application signal, the at least one variable being selected from:

- a window size for a or for the moving average filter (11),
- a lower threshold value (13),
- an upper threshold value (15),
- a window size for a or for the maximum filter (17),

after changing the at least one variable:

reading the first time series of signals from the pair of temperature sensors (5a, 5b);
reading the second time series of signals from the flow sensor;
determining the third time series of rates of thermal energy exchange by the at least one thermal energy exchanger (4) based on the first and the second time series;
determining the averaged series of rates by applying the moving average filter (11) to the third time series, the moving average filter (11) determining a plurality of subsets of the third time series and calculating an arithmetic average for each subset of the plurality of subsets, each subset of the plurality of subsets being at least as long as the window size for the moving average filter (11);
producing the first bounded series of rates by replacing rates of the averaged series that are less than the lower threshold value (13) with rates that equal the lower threshold value (13);
producing the second bounded series of rates by replacing rates of the first bounded series that are greater than the upper threshold value (15) with rates that equal the upper threshold value (15);
determining the maximum rate of thermal energy exchange by applying the maximum filter (17) to the second bounded series;
the maximum filter (17) determining a subset of the second bounded series; and
the maximum filter (17) returning the greatest rate of the subset of the second bounded series, the subset of the second bounded series being at least as long as the window size for the maximum filter (17).

According to an aspect of the present disclosure, the step of connecting to a mobile handheld device (18) involves connecting to a mobile handheld device (18) using a digital communication bus. The digital communication bus preferably comprises a wireless communication bus.

In an embodiment, the mobile handheld device (18) comprises a mobile phone and/or a tablet computer. In another embodiment, the mobile handheld device (18) is a mobile phone or is a tablet computer.

Communication with the mobile handheld device (18) enables an operator to change the algorithm without direct and/or without physical access to the assembly (1).

The instant disclosure still deals with any of the methods of limiting the rate of exchange of thermal energy by the at least one thermal energy exchanger (4) of the assembly (1) as described above, the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6), the method comprising the steps of:

connecting to a remote controller (19);
receiving a remote control signal from the remote controller (19) using a digital communication protocol;
setting at least one variable as a function of the remote control signal, the at least one variable being selected from:

- a window size for a or for the moving average filter (11),
- a lower threshold value (13),
- an upper threshold value (15),
- a window size for the maximum filter (17),

after setting the at least one variable:

reading the first time series of signals from the pair of temperature sensors (5a, 5b);
reading the second time series of signals from the flow sensor;
determining the third time series of rates of thermal energy exchange by the at least one thermal energy exchanger (4) based on the first and the second time series;
determining the averaged series of rates by applying the moving average filter (11) to the third time series, the moving average filter (11) determining a plurality of subsets of the third time series and calculating an arithmetic average for each subset of the plurality of subsets, each subset of the plurality of subsets being at least as long as the window size for the moving average filter (11);
producing the first bounded series of rates by replacing rates of the averaged series that are less than the lower threshold value (13) with rates that equal the lower threshold value (13);
producing the second bounded series of rates by replacing rates of the first bounded series that are greater than the upper threshold value (15) with rates that equal the upper threshold value (15);
determining the maximum rate of thermal energy exchange by applying the maximum filter (17) to the second bounded series;
the maximum filter (17) determining a subset of the second bounded series; and
the maximum filter (17) returning the greatest rate of the subset of the second bounded series, the subset of the second bounded series being at least as long as the window size for the maximum filter (17).

Communication with the remote controller (19) enables an operator to change the algorithm without direct and/or without physical access to the assembly (1).

The present disclosure also deals with any of the aforementioned methods of limiting the rate of exchange of thermal energy by the at least one thermal energy exchanger (4) of the assembly (1), the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6), the method comprising the steps of:

connecting to a remote controller (19);
receiving a remote control signal from the remote controller (19) using a digital communication protocol;
changing at least one variable as a function of the remote control signal, the at least one variable being selected from:

- a window size for a or for the moving average filter (11),
- a lower threshold value (13),
- an upper threshold value (15),
- a window size for the maximum filter (17),

after changing the at least one variable:

reading the first time series of signals from the pair of temperature sensors (5a, 5b);
reading the second time series of signals from the flow sensor;
determining the third time series of rates of thermal energy exchange by the at least one thermal energy exchanger (4) based on the first and the second time series;
determining the averaged series of rates by applying the moving average filter (11) to the third time series, the moving average filter (11) determining a plurality of subsets of the third time series and calculating an arithmetic average for each subset of the plurality of subsets, each subset of the plurality of subsets being at least as long as the window size for the moving average filter (11);
producing the first bounded series of rates by replacing rates of the averaged series that are less than the lower threshold value (13) with rates that equal the lower threshold value (13);
producing the second bounded series of rates by replacing rates of the first bounded series that are greater than the upper threshold value (15) with rates that equal the upper threshold value (15);
determining the maximum rate of thermal energy exchange by applying the maximum filter (17) to the second bounded series;

the maximum filter (17) determining a subset of the second bounded series; and

the maximum filter (17) returning the greatest rate of the subset of the second bounded series, the subset of the second bounded series being at least as long as the window size for the maximum filter (17).

According to an aspect of the present disclosure, the step of connecting to a remote controller (19) involves connecting to a remote controller (19) using a digital communication bus. The digital communication bus preferably comprises a wireless communication bus. A wireless communication bus alleviates the connection to the remote controller (19).

The present disclosure still deals with any of the methods of limiting the rate of exchange of thermal energy by at least one thermal energy exchanger (4) of the assembly (1) as described above, the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

wherein the assembly (1) additionally comprises a local controller (8) in communication with the pair of temperature sensors (5a, 5b) and with the flow sensor and with the actuator (7), the local controller (8) also being in communication with a remote controller (19), the remote controller (19) being located remotely from the local controller (8);

the method comprising the steps of:

the local controller (8) reading the first time series of signals from the pair of temperature sensors (5a, 5b);

the local controller (8) reading the second time series of signals from the flow sensor;

the local controller (8) transmitting the first and the second time series of signals to the remote controller (19) using a digital communication protocol;

the remote controller (19) determining the third time series of rates of thermal energy exchange by the at least one thermal energy exchanger (4) based on the first and the second time series;

the remote controller (19) determining the averaged series of rates by determining a plurality of moving averages of the time series of rates of thermal energy exchange;

the remote controller (19) producing the first bounded series of rates by replacing rates of the averaged series that are less than the lower threshold (13) with rates that equal the lower threshold (13);

the remote controller (19) producing the second bounded series of rates by replacing rates of the first bounded series that are greater than the upper threshold (15) with rates that equal the upper threshold (15);

the remote controller (19) determining the maximum rate by applying the maximum filter (17) to the second bounded series, the maximum filter (17) returning the greatest rate of the second bounded series;

the remote controller (19) transmitting the maximum rate to the local controller (8) using the digital communication protocol;

the local controller (8) reading the set point signal (9);

the local controller (8) using the maximum rate to limit the set point signal (9);

the local controller (8) producing the limitation signal based on the limited set point signal; and

the local controller (8) transmitting the limitation signal to the actuator (7), the limitation signal causing the actuator (7) to limit the position of the valve member (6).

More specifically, it is envisaged that the method comprises the steps of:

the local controller (8) reading the first time series of temperature signals from the pair of temperature sensors (5a, 5b); and

the local controller (8) reading the second time series of flow signals from the flow sensor.

In an embodiment, the remote controller (19) comprises a cloud computer. It is envisaged that the local controller (8) comprises a microcontroller (8) and/or a microprocessor (8).

Cooperation between the local controller (8) and the remote controller (19) allows the use of a local controller (8) with modest resources. The local controller (8) can have modest resources because complex computations of the algorithm are carried out by the remote controller (19).

The instant disclosure still further deals with any of the methods of limiting the rate of exchange of thermal energy by at least one thermal energy exchanger (4) of the assembly (1) as described above, the assembly (1) comprising the pair of temperature sensors (5a, 5b) and the flow sensor and the at least one thermal energy exchanger (4) and the valve member (6) in fluid communication with the at least one thermal energy exchanger (4) and the actuator (7) coupled to the valve member (6),

wherein the assembly (1) additionally comprises a local controller (8) in communication with the pair of temperature sensors (5a, 5b) and with the flow sensor and with the actuator (7), the local controller (8) also being in communication with a remote controller (19), the remote controller (19) being located remotely from the local controller (8);
the method comprising the steps of:

the local controller (8) reading the first time series of signals from the pair of temperature sensors (5a, 5b);
the local controller (8) reading the second time series of signals from the flow sensor;
the local controller (8) determining a third time series of rates of thermal energy exchange by the at least one thermal energy exchanger (4) based on the first and the second time series;
the local controller (8) transmitting the third time series to the remote controller (19) using a digital communication protocol;
the remote controller (19) determining the averaged series of rates by determining a plurality of moving averages of the time series of rates of thermal energy exchange;
the remote controller (19) producing the first bounded series of rates by replacing rates of the averaged series that are less than the lower threshold (13) with rates that equal the lower threshold (13);
the remote controller (19) producing the second bounded series of rates by replacing rates of the first bounded series that are greater than the upper threshold (15) with rates that equal the upper threshold (15);
the remote controller (19) determining the maximum rate by applying the maximum filter (17) to the second bounded series, the maximum filter (17) returning the greatest rate of the second bounded series;
the remote controller (19) transmitting the maximum rate to the local controller (8) using the digital communication protocol;
the local controller (8) reading the set point signal (9);
the local controller (8) using the maximum rate to limit the set point signal (9);
the local controller (8) producing the limitation signal based on the limited set point signal; and
the local controller (8) transmitting the limitation signal to the actuator (7), the limitation signal causing the actuator (7) to limit the position of the valve member (6).

More specifically, it is envisaged that the method comprises the steps of:

the local controller (8) reading the first time series of temperature signals from the pair of temperature sensors (5a, 5b); and
the local controller (8) reading the second time series of flow signals from the flow sensor.

The instant disclosure also deals with any of the aforementioned methods of limiting the rate of exchange of thermal energy by the at least one thermal energy exchanger (4) of the assembly (1), the assembly (1) comprising the local controller (8) and the at least one thermal energy exchanger (4) and the valve member (6) and the actuator (7) coupled to the valve member (6), the method involving a local controller (8) and a remote controller (19), the method comprising the steps of:

the local controller (8) transmitting the third time series to the remote controller (19) using the digital communication protocol; and
the remote controller (19) receiving the third time series from the local controller (8) using the digital communication protocol.

The instant disclosure also deals with any of the aforementioned methods of limiting the rate of exchange of thermal energy by the at least one thermal energy exchanger (4) of the assembly (1), the assembly (1) comprising the local controller (8) and the at least one thermal energy exchanger (4) and the valve member (6) and the actuator (7) coupled to the valve member (6), the method involving a local controller (8) and a remote controller (19), the method comprising the steps of:

the remote controller (19) transmitting the maximum rate to the local controller (8) using the digital communication protocol; and
the local controller (8) receiving the maximum rate from the remote controller (19) using the digital communication protocol.

It is envisaged that any of the aforementioned methods involving a local controller (8) and a remote controller (19), the method comprising the step of:
the remote controller (19) changing the third time series by multiplying each rate of thermal energy exchange of the third time series with a scale factor.
The local controller (8) is different from the remote controller (19).
The present disclosure yet further deals with an application of any of the aforementioned methods to limit the rate of exchange of thermal energy by at least one thermal energy exchanger (4) of a system for heating and/or ventilation and/or air-conditioning.
The instant disclosure also deals with an application of any of the aforementioned methods of limiting the rate of exchange of thermal energy by the at least one thermal energy exchanger (4) of the assembly (1) to limit the rate of exchange of thermal energy by at least one thermal energy exchanger (4) of the assembly (1) of an installation for heating and/or ventilation and/or air-conditioning.
The present disclosure still deals with an application of any of the aforementioned methods of limiting the rate of exchange of thermal energy by the at least one thermal energy exchanger (4) of the assembly (1), wherein the assembly (1) comprises a or the controller (8). This controller (8) is advantageously in communication with the pair of temperature sensors (5a, 5b) and with the flow sensor and with the actuator (7).

As described in detail herein, the present disclosure deals with an assembly (1) such as an assembly (1) of a system for heating and/or ventilation and/or air-conditioning, the assembly (1) comprising:

an inlet port (2) and an outlet port (3);

a fluid path extending between the inlet port (2) and the outlet port (3) and at least one thermal energy exchanger (4) situated in the fluid path;

a flow sensor in operative communication with the fluid path and a pair of temperature sensors (5a, 5b), the pair of temperature sensors (5a, 5b) comprising a first sensor (5a) in operative communication with the fluid path and arranged at or near the inlet port (2), the pair of temperature sensors (5a, 5b) comprising a second sensor (5b) in operative communication with the fluid path and arranged at or near the outlet port (3);

a valve member (6) situated in the fluid path between the inlet port (2) and the outlet port (3), the valve member (6) being selectively movable between a closed position which closes the fluid path between the inlet port (2) and the outlet port (3), and an open position which opens the fluid path between the inlet port (2) and the outlet port (3);

an actuator (7), secured relative to the assembly (1), for selectively moving the valve member (6) between the closed position and the open position;

a controller (8) secured relative to the assembly (1) and having a memory storing a lower threshold (13) and an upper threshold (15) and being in communication with the memory, with the actuator (7) and being in communication with the flow sensor and with the pair of temperature sensors (5a, 5b), the controller (8) being configured to:

read a first time series of signals from the pair of temperature sensors (5a, 5b);

read a second time series of signals from the flow sensor;

determine a third time series of rates of thermal energy exchange by the at least one thermal energy exchanger (4) based on the first and the second time series;

determine an averaged series of rates by determining a plurality of moving averages of the time series of rates of thermal energy exchange;

determine a first bounded series of rates by replacing rates of the averaged series that are less than the lower threshold (13) with rates that equal the lower threshold (13);

determine a second bounded series of rates by replacing rates of the first bounded series that are greater than the upper threshold (15) with rates that equal the upper threshold (15);

determine a maximum rate of thermal energy exchange by applying a maximum filter (17) to the second bounded series, the maximum filter (17) returning the greatest rate of the second bounded series;

read a set point signal (9) indicative of a rate of exchange of thermal energy by the at least one thermal energy exchanger (4);

use the maximum rate to limit the set point signal (9);

produce a limitation signal from the limited set point signal; and

transmit the limitation signal to the actuator (7), the limitation signal causing the actuator (7) to limit the position of the valve member (6).

The instant disclosure also deals with an assembly (1) comprising:

an inlet port (2) and an outlet port (3);

a fluid path extending between the inlet port (2) and the outlet port (3) and at least one thermal energy exchanger (4) situated in the fluid path;

a flow sensor in operative communication with the fluid path for recording a flow rate along the fluid path, a pair of temperature sensors (5a, 5b), the pair of temperature sensors (5a, 5b) comprising a first sensor (5a) for recording a temperature at or near the inlet port (2), the first sensor (5a) being in operative communication with the fluid path and arranged at or near the inlet port (2), the pair of temperature sensors (5a, 5b) comprising a second sensor (5b) for recording a temperature at or near the outlet port (3), the second sensor (5b) being in operative communication with the fluid path and arranged at or near the outlet port (3);

a valve member (6) situated in the fluid path between the inlet port (2) and the outlet port (3), the valve member (6) being selectively movable between a closed position which closes the fluid path between the inlet port (2) and the outlet port (3), and an open position which opens the fluid path between the inlet port (2) and the outlet port (3);

an actuator (7), secured relative to the assembly (1), for selectively moving the valve member (6) between the closed position and the open position;

a controller (8) secured relative to the assembly (1) and having a memory storing a lower threshold (13) and an upper threshold (15) and being in communication with the memory, with the actuator (7) and being in communication with the flow sensor and with the pair of temperature sensors (5a, 5b), the controller (8) being configured to:

read a first time series of signals from the pair of temperature sensors (5a, 5b);

determine a time series of temperature drops

$\Delta T_{io}$, $\Delta T_{sr}$ based on the first time series of signals;

read a second time series of signals from the flow sensor;

determine a time series of flow rates $\varphi$ based on the second time series of signals;

determine a third time series of rates of thermal energy exchange by the at least one thermal energy exchanger (4) as a function of the time series of temperature drops $\Delta T_{io}$, $\Delta T_{sr}$ and as a function of the time series of flow rates $\varphi$;

determine an averaged series of rates by determining a plurality of moving averages of the time series of rates of thermal energy exchange;

determine a first bounded series of rates by replacing rates of the averaged series that are less than the lower threshold (13) with rates that equal the lower threshold (13);

determine a second bounded series of rates by replacing rates of the first bounded series that are greater than the upper threshold (15) with rates that equal the upper threshold (15);

determine a maximum rate of thermal energy exchange by applying a maximum filter (17) to the second bounded series, the maximum filter (17) returning the greatest rate of the second bounded series;

read a set point signal (9) indicative of a rate of exchange of thermal energy by the at least one thermal energy exchanger (4);

use the maximum rate to limit the set point signal (9);

produce a limitation signal from the limited set point signal; and

transmit the limitation signal to the actuator (7), the limitation signal causing the actuator (7) to limit the position of the valve member (6).

The instant disclosure also pertains to any of the aforementioned assemblies (1), wherein the controller (8) is configured to:

determine the third time series of rates of thermal energy exchange by the at least one thermal energy exchanger (4) by multiplying temperature drops $\Delta T_{io}$, $\Delta T_{sr}$ of the time series of temperature drops $\Delta T_{io}$, $\Delta T_{sr}$ with flow rates $\varphi$ of the time series of flow rates $\varphi$.

According to an aspect of the present disclosure, the valve member (6) is situated in the fluid path between the inlet port (2) and the outlet port (3) and is continuously movable between a closed position which closes the fluid path between the inlet port (2) and the outlet port (3), and an open position which opens the fluid path between the inlet port (2) and the outlet port (3).

Assemblies (1) having continuously movable valve members (6) accurately limit the rate of exchange of thermal energy by the at least one thermal energy exchanger (4) over a wide range.

The actuator (7) of the assembly (1) advantageously is or comprises a valve actuator (7). The actuator (7) of the assembly (1) preferably couples to the valve member (6) of the assembly (1). The actuator (7) of the assembly (1) can be or can comprise a solenoid actuator.

It is envisaged that the controller (8) is or comprises a valve controller (8) such as a microcontroller (8) and/or a microprocessor (8) and/or an application-specific integrated circuit and/or a freely programmable gate array. It is also envisaged that the controller (8) is or comprises a local controller (8) such as a microcontroller (8) and/or a microprocessor (8) and/or an application-specific integrated circuit and/or a freely programmable gate array. The controller (8) and/or the valve controller (8) and/or the local controller (8) and/or the microcontroller (8) and/or the microprocessor (8) and/or the application-specific integrated circuit and/or the freely programmable gate array can be mounted to the assembly (1).

It is envisaged that the actuator (7) is mounted to the assembly (1). It is also envisaged that the valve member (6) is secured relative to the assembly (1) and/or that the valve member (6) is mounted to the assembly (1).

It is envisaged that the flow through the assembly (1) is a fluid flow such as

- a flow of water,
- a flow of ethylene glycol,
- a flow of propylene glycol,
- a flow of a mixture of water and ethylene glycol,
- a flow of a mixture of water and propylene glycol, and/or
- a flow of a mixture of water, ethylene glycol, and propylene glycol.

The flow, especially the fluid flow as detailed above, advantageously takes place along the fluid path of the assembly (1).

The assembly (1) advantageously has a controller (8) such as a microcontroller (8) and/or a microprocessor (8) and/or an application-specific integrated circuit and/or a freely programmable gate array. The assembly (1) ideally comprises a control valve comprising the valve member (6) and the actuator (7). The control valve affords control of rates of thermal energy exchanged by the at least one thermal energy exchanger (4).

It is envisaged that the controller (8) is configured to:

produce a maximum rate by applying the maximum filter (17) to the second bounded series;

the maximum filter (17) reading the second bounded series;

the maximum filter (17) determining a subset of the second bounded series; and

the maximum filter (17) returning the greatest rate of the subset of the second bounded series.

In an embodiment, the controller (8) comprises the maximum filter (17). The maximum filter (17) of the controller (8) can be a moving maximum filter (17) of the controller (8).

The instant disclosure also deals with any of the assemblies (1) as described above,

wherein the pair of temperature sensors (5a, 5b) is secured relative to the assembly (1);
wherein the pair of temperature sensors (5a, 5b) is configured to sense a flow rate φ and/or a pressure drop of a fluid within the fluid path; and
wherein the pair of temperature sensors (5a, 5b) comprises the flow sensor.

The instant disclosure still deals with any of the assemblies (1) as described above,

wherein the pair of temperature sensors (5a, 5b) is secured relative to the assembly (1);
wherein the pair of temperature sensors (5a, 5b) is configured to sense a flow rate φ and/or a pressure drop of a fluid within the fluid path; and
wherein flow sensor comprises the pair of temperature sensors (5a, 5b).

In an embodiment, the pair of temperature sensors (5a, 5b) is mounted to the assembly (1).

The present disclosure still deals with any of the assemblies (1) as described above, the controller (8) being configured to:

read a first time series of temperature signals from the pair of temperature sensors (5a, 5b); and
read a second time series of flow signals from the flow sensor.

According to another aspect of the present disclosure, a rate of exchange of thermal energy by the at least one thermal energy exchanger (4) is limited by the controller (8) being configured to:

read an operational signal indicative of a temperature drop $\Delta T_{io}$, $\Delta T_{sr}$ from the pair of temperature sensors (5a, 5b);
read an operational signal indicative of a flow rate φ from the flow sensor;
determine an operational rate of thermal energy exchange based on the operational signal indicative of the temperature drop $\Delta T_{io}$, $\Delta T_{sr}$ and based on the operational signal indicative of the flow rate φ;
compare the operational rate to the maximum rate;
if the operational rate is greater than the maximum rate:

produce the limitation signal based on the maximum rate; and
transmit the limitation signal to the actuator (7), the limitation signal causing the actuator (7) to limit the position of the valve member (6).

The operational signal indicative of a temperature drop $\Delta T_{io}$, $\Delta T_{sr}$ is ideally not comprised by the first time series of signals. Likewise, the operational signal indicative of the flow rate φ is ideally not comprised by the second time series of signals. Likewise, the operational rate of energy exchange is ideally not comprised by the third time series.

The present disclosure still deals with any of the assemblies (1) as described above,

wherein the memory of the controller (8) additionally stores a scale factor;
wherein the controller (8) is configured to:
change the third time series by multiplying each rate of the third time series with the scale factor.

In an embodiment, the scale factor is a predetermined scale factor. The scale factor advantageously is the same for all rates of the third time series.

The present disclosure deals with any of the aforementioned assemblies (1),

wherein the memory of the controller (8) additionally stores a scale factor;
wherein the controller (8) additionally comprises a multiplier (12);
wherein the controller (8) is configured to:

employ the multiplier (12) to read the third time series; and
employ the multiplier (12) to adjust and/or to change each rate of the third time series by multiplying the rate with the scale factor.

The present disclosure deals with any of the aforementioned assemblies (1),

wherein the memory of the controller (8) additionally stores a scale factor;
wherein the controller (8) additionally comprises a multiplier (12);
wherein the controller (8) is configured to:

employ the multiplier (12) to read the third time series;
employ the multiplier (12) to adjust and/or to change each rate of the third time series by multiplying the rate with the scale factor; and
after multiplication, employ the multiplier (12) to return the third time series.

It is envisaged that the multiplier (12) returns an adjusted and/or a changed third time series. It is also envisaged that the adjusted and/or changed third time series thereafter becomes the basis for subsequent filtering.

The instant disclosure further deals with any of the assemblies (1) as described above,

> wherein the controller (8) comprises an input interface such as a digital input interface; and
> wherein the controller (8) is configured to:
> read the set point signal (9) from the input interface of the controller (8).

A digital input interface of the controller (8) affords precise settings.

In an embodiment, the input interface of the controller (8) comprises an analog input port and/or an analog input pin. The input interface of the controller (8) can be an analog input port of a microcontroller (8) and/or an analog input port of a microprocessor (8). The input interface of the controller (8) can also be an analog input pin of a microcontroller (8) and/or an analog input pin of a microprocessor (8). In an alternate embodiment, the input interface of the controller (8) comprises a digital input port and/or a digital input pin. The input interface of the controller (8) can be a digital input port of a microcontroller (8) and/or a digital input port of a microprocessor (8). The input interface of the controller (8) can also be a digital input pin of a microcontroller (8) and/or a digital input pin of a microprocessor (8).

Analog input ports and analog input pins afford communication with analog sensors such as analog temperature sensors (5a, 5b).

According to an aspect of the present disclosure, the controller (8) comprises a screen having a graphical user interface and/or a touch screen having a graphical user interface. The screen and/or the touch screen forms a human-machine interface of the controller (8).

The instant disclosure also deals with a computer program comprising instructions to cause the controller (8) of any of the aforementioned assemblies (1) to execute the steps of any of the aforementioned methods not involving transmission of flow signals and/or flow rates φ between a local controller (8) and a remote controller (19).

The present disclosure further deals with a computer program product comprising instructions to cause the controller (8) of any of the aforementioned assemblies (1) to execute the steps of any of the aforementioned methods of limiting the rate of exchange of thermal energy by the at least one thermal energy exchanger (4) of the assembly (1).

The present disclosure still further deals with a computer program comprising instructions which, when the program is executed by a local controller (8) of an assembly (1), cause the local controller (8) to:

> read a first time series of signals from the pair of temperature sensors (5a, 5b);
> read a second time series of signals from the flow sensor;
determine a third time series of rates of thermal energy exchange by the at least one thermal energy exchanger (4) based on the first and the second time series;
transmit the third time series to a remote controller (19) using a digital communication protocol;
receive a maximum rate from the remote controller (19) using the digital communication protocol;
read a set point signal (9) indicative of a rate of exchange of thermal energy by the at least one thermal energy exchanger (4);
use the maximum rate to limit the set point signal (9);
produce a limitation signal from the limited set point signal; and
transmit the limitation signal to the actuator (7), the limitation signal causing the actuator (7) to limit the position of the valve member (6).

More specifically, it is envisaged that the local controller (8) is configured to:

> read a first time series of temperature signals from the pair of temperature sensors (5a, 5b); and
> read a second time series of flow signals from the flow sensor.

According to an aspect of the present disclosure, the local controller (8) is configured to limit the set point signal (9) as a function of the maximum rate. According to a related aspect of the present disclosure, the local controller (8) is configured to:

> produce a maximum signal from the maximum rate; and
> limit the set point signal (9) to the maximum signal.

The instant disclosure yet further deals with a computer program comprising instructions which, when the program is executed by a remote controller (19), cause the remote controller (19) to:

> receive a time series of rates of thermal energy exchange from a local controller (8) using a digital communication protocol;
> determine an averaged series of rates by determining a plurality of moving averages of the time series of rates of thermal energy exchange;
> determine a first bounded series of rates by replacing rates of the averaged series that are less than a lower threshold (13) with rates that equal the lower threshold (13);
> determine a second bounded series of rates by replacing rates of the first bounded series that are greater than an upper threshold (15) with rates that equal the upper threshold (15);
> determine a maximum rate of thermal energy exchange by applying a maximum filter (17) to the second bounded series, the maximum filter (17) returning the greatest rate of the second bounded series; and

transmit the maximum rate to the local controller (8) using the digital communication protocol.

According to an aspect of the present disclosure, the maximum filter (17) is or comprises a moving maximum filter.

It is envisaged that the remote controller (19) is configured to:

change the third time series by multiplying each rate of the third time series with the scale factor.

In an embodiment, the computer program comprises instructions which, when the program is executed by a remote controller (19), cause the remote controller (19) to:

produce a maximum rate by applying the maximum filter (17) to the second bounded series;
the maximum filter (17) reading the second bounded series;
the maximum filter (17) determining a subset of the second bounded series; and
the maximum filter (17) returning the greatest rate of the subset of the second bounded series.

According to an aspect of the present disclosure, the remote controller (19) comprises the maximum filter (17). The maximum filter (17) of the remote controller (19) can be a moving maximum filter (17) of the remote controller (19).

The instant disclosure still deals with a computer-readable medium having stored thereon any of the aforementioned computer programs.

The present disclosure also pertains to a local controller (8) of an assembly (1), the assembly (1) comprising an inlet port (2), an outlet port (3), a fluid path extending between the inlet port (2) and the outlet port (3), a flow sensor in operative communication with the fluid path for recording a flow rate along the fluid path, a pair of temperature sensors (5a, 5b), the pair of temperature sensors (5a, 5b) comprising a first sensor (5a) for recording a temperature at or near the inlet port (2), the first sensor (5a) being in operative communication with the fluid path and arranged at or near the inlet port (2), the pair of temperature sensors (5a, 5b) comprising a second sensor (5b) for recording a temperature at or near the outlet port (3), the second sensor (5b) being in operative communication with the fluid path and arranged at or near the outlet port (3), the assembly (1) comprising a valve member (6) situated in the fluid path between the inlet port (2) and the outlet port (3), the valve member (6) being selectively movable between a closed position which closes the fluid path between the inlet port (2) and the outlet port (3), and an open position which opens the fluid path between the inlet port (2) and the outlet port (3), and an actuator (7) for selectively moving the valve member (6) between the closed position and the open position, the local controller (8) being configured to:

read a first time series of signals from the pair of temperature sensors (5a, 5b);
determine a time series of temperature drops $\Delta T_{io}$, $\Delta T_{sr}$ based on the first time series of signals;
read a second time series of signals from the flow sensor;
determine a time series of flow rates $\varphi$ based on the second time series of signals;
determine a third time series of rates of thermal energy exchange by the at least one thermal energy exchanger (4) as a function of the time series of temperature drops $\Delta T_{io}$, $\Delta T_{sr}$ and as a function of the time series of flow rates $\varphi$;
transmit the third time series to the remote controller (19) according to claim 15;
receive a maximum rate from the remote controller (19) according to claim 15 using the digital communication protocol;
read a set point signal (9) indicative of a rate of exchange of thermal energy by the at least one thermal energy exchanger (4);
use the maximum rate to limit the set point signal (9);
produce a limitation signal from the limited set point signal; and
transmit the limitation signal to the actuator (7), the limitation signal causing the actuator (7) to limit the position of the valve member (6).

The instant disclosure also deals with a remote controller (19) being configured to:

receive a time series of rates of thermal energy exchange from the aforementioned local controller (8) using a digital communication protocol;
determine an averaged series of rates by determining a plurality of moving averages of the time series of rates of thermal energy exchange;
determine a first bounded series of rates by replacing rates of the averaged series that are less than a lower threshold (13) with rates that equal the lower threshold (13);
determine a second bounded series of rates by replacing rates of the first bounded series that are greater than an upper threshold (15) with rates that equal the upper threshold (15);
determine a maximum rate of thermal energy exchange by applying a maximum filter (17) to the second bounded series, the maximum filter (17) returning the greatest rate of the second bounded series; and
transmit the maximum rate to the aforementioned local controller (8) using the digital communication protocol.

The instant disclosure also pertains to any of the aforementioned local controllers (8), wherein the local controller (8) is configured to:
determine the third time series of rates of thermal energy exchange by the at least one thermal energy exchanger (4) by multiplying temperature drops $\Delta T_{io}$, $\Delta T_{sr}$ of the time series of temperature drops $\Delta T_{io}$, $\Delta T_{sr}$ with flow rates $\varphi$ of the time series of flow rates $\varphi$.

The aforementioned rates of thermal energy exchange by the at least one thermal energy exchanger (4) are indicative of amounts of thermal power absorbed by or dissipated by the at least one thermal energy exchanger (4). A rate of thermal energy exchange by the at least one thermal energy exchanger (4) is thus measured and/or indicated in Watts. Likewise, an amount of thermal energy exchange by the at least one thermal energy exchanger (4) is measured and/or indicated in Watts.

The aforementioned rates of thermal energy exchange are indicative of amounts of thermal power. A rate of thermal energy exchange is thus measured and/or indicated in Watts. Likewise, an amount of thermal energy exchange is measured and/or indicated in Watts.

It should be understood that the foregoing relates only to certain embodiments of the disclosure and that numerous changes can be made therein without departing from the scope of the disclosure as defined by the following claims. It should also be understood that the disclosure is not restricted to the illustrated embodiments and that various modifications can be made within the scope of the claims.

Reference numerals

1 valve
2 inlet
3 outlet
4 thermal energy exchanger
5a, 5b flow sensor
6 valve member
7 actuator
8 controller
9 set point signal
10 control algorithm
11 moving average filter
12 multiplier
13 lower threshold (value)
14 first threshold filter
15 upper threshold (value)
16 second threshold filter
17 maximum filter
18 mobile handheld device
19 remote controller

**Claims**

1. A method of limiting a rate of exchange of thermal energy via at least one thermal energy exchanger (4) of an assembly (1), the assembly (1) comprising an inlet port (2), an outlet port (3), a fluid path extending between the inlet port (2) and the outlet port (3), a pair of temperature sensors (5a, 5b), a flow sensor for recording a flow rate along the fluid path, the at least one thermal energy exchanger (4) and a valve member (6) in fluid communication with the at least one thermal energy exchanger (4) and an actuator (7) coupled to the valve member (6), the pair of sensors (5a, 5b) comprising a first sensor (5a) for recording a temperature at or near the inlet port (2) and a second sensor (5b) for recording a temperature at or near the outlet port (3), the valve member (6) being selectively movable between a closed position which closes the fluid path between the inlet port (2) and the outlet port (3), and an open position which opens the fluid path between the inlet port (2) and the outlet port (3), the method comprising the steps of:

reading a first time series of signals from the pair of temperature sensors (5a, 5b);
determining a time series of temperature drops $\Delta T_{io}$, $\Delta T_{sr}$ based on the first time series of signals;
reading a second time series of signals from the flow sensor;
determining a time series of flow rates $\varphi$ based on the second time series of signals;
determining a third time series of rates of thermal energy exchange by the at least one thermal energy exchanger (4) as a function of the time series of temperature drops $\Delta T_{io}$, $\Delta T_{sr}$ and as a function of the time series of flow rates $\varphi$;
producing an averaged series of rates by determining a plurality of moving averages of the third time series;
producing a first bounded series of rates by replacing rates of the averaged series that are less than a lower threshold (13) with rates that equal the lower threshold (13);
producing a second bounded series of rates by replacing rates of the first bounded series that are greater than an upper threshold (15) with rates that equal the upper threshold (15);
determining a maximum rate of thermal energy exchange by applying a maximum filter (17) to the second bounded series, the maximum filter (17) returning the greatest rate of the second bounded series;
reading a set point signal (9) indicative of a rate of exchange of thermal energy by the at least one thermal energy exchanger (4);
using the maximum rate to limit the set point signal (9);

producing a limitation signal from the limited set point signal (9); and
transmitting the limitation signal to the actuator (7), the limitation signal causing the actuator (7) to limit the position of the valve member (6).

2. The method according to claim 1, the method comprising the step of:
changing the third time series by using a multiplier (12) to multiply each rate of thermal energy exchange of the third time series with a scale factor.

3. The method according to any of the claims 1 to 2, the method comprising the steps of:

connecting to a mobile handheld device (18);
receiving a mobile application signal from the mobile handheld device (18) using a digital communication protocol;
setting at least one variable as a function of the mobile application signal, the at least one variable being selected from:

- a window size for a moving average filter (11),
- a lower threshold value (13),
- an upper threshold value (15),
- a window size for the maximum filter (17),

after setting the at least one variable:

reading the first time series of signals from the pair of temperature sensors (5a, 5b);
reading the second time series of signals from the flow sensor;
determining the third time series of rates of thermal energy exchange by the at least one thermal energy exchanger (4) based on the first and the second time series;
determining the averaged series of rates by applying the moving average filter (11) to the third time series, the moving average filter (11) determining a plurality of subsets of the third time series and calculating an arithmetic average for each subset of the plurality of subsets, each subset of the plurality of subsets being at least as long as the window size for the moving average filter (11);
producing the first bounded series of rates by replacing rates of the averaged series that are less than the lower threshold value (13) with rates that equal the lower threshold value (13);
producing the second bounded series of rates by replacing rates of the first bounded series that are greater than the upper threshold value (15) with rates that equal the upper threshold value (15);
determining the maximum rate of thermal energy exchange by applying the maximum filter (17) to the second bounded series;
the maximum filter (17) determining a subset of the second bounded series; and
the maximum filter (17) returning the greatest rate of the subset of the second bounded series, the subset of the second bounded series being at least as long as the window size for the maximum filter (17).

4. The method according to any of the claims 1 to 2, the method comprising the steps of:

connecting to a remote controller (19);
receiving a remote control signal from the remote controller (19) using a digital communication protocol;
setting at least one variable as a function of the remote control signal, the at least one variable being selected from:

- a window size for a moving average filter (11),
- a lower threshold value (13),
- an upper threshold value (15),
- a window size for the maximum filter (17),

after setting the at least one variable:

reading the first time series of signals from the pair of temperature sensors (5a, 5b);
reading the second time series of signals from the flow sensor;
determining the third time series of rates of thermal energy exchange by the at least one thermal energy exchanger (4) based on the first and the second time series;
determining the averaged series of rates by applying the moving average filter (11) to the third time series, the moving average filter (11) determining a plurality of subsets of the third time series and calculating an arithmetic average for each subset of the plurality of subsets, each subset of the plurality of subsets being at least as long as the window size for the moving average filter (11);
producing the first bounded series of rates by replacing rates of the averaged series that are less than the lower threshold value (13) with rates that equal the lower threshold value (13);
producing the second bounded series of rates by replacing rates of the first bounded series that are greater than the upper threshold value (15) with rates that equal the upper threshold value (15);
determining the maximum rate of thermal energy exchange by applying the maximum filter (17) to the second bounded series;
the maximum filter (17) determining a subset of the second bounded series; and
the maximum filter (17) returning the greatest rate of the subset of the second bounded series, the subset of the second bounded series being at least as long as the window size for the maximum filter (17).

5. The method according to any of the claims 1 to 4,

wherein the assembly (1) additionally comprises a local controller (8) in communication with the pair of temperature sensors (5a, 5b) and with the flow sensor and with the actuator (7), the local controller (8) also being in communication with a remote controller (19), the remote controller (19) being located remotely from the local controller (8);
the method comprising the steps of:

the local controller (8) reading the first time series of signals from the pair of temperature sensors (5a, 5b);
the local controller (8) reading the second time series of signals from the flow sensor;
the local controller (8) transmitting the first and the second time series of signals to the remote controller (19) using a digital communication protocol;
the remote controller (19) determining the third time series from the time series of signals;
the remote controller (19) determining the third time series of rates of thermal energy exchange by the at least one thermal energy exchanger (4) based on the first and the second time series;
the remote controller (19) producing the first bounded series of rates by replacing rates of the averaged series that are less than the lower threshold (13) with rates that equal the lower threshold (13);
the remote controller (19) determining the maximum rate of thermal energy exchange by applying a maximum filter (17) to the second bounded series, the maximum filter (17) returning the greatest rate of the second bounded series;
the remote controller (19) transmitting the maximum rate of thermal energy exchange to the local controller (8) using the digital communication protocol;
the local controller (8) reading the set point signal (9) indicative of the rate of thermal energy exchange by the at least one thermal energy exchanger (4);
the local controller (8) using the maximum rate to limit the set point signal (9);
the local controller (8) producing the limitation signal based on the limited set point signal (9); and
the local controller (8) transmitting the limitation signal to the actuator (7), the limitation signal causing the actuator (7) to limit the position of the valve member (6).

6. The method according to any of the claims 1 to 4,

wherein the assembly (1) additionally comprises a local controller (8) in communication with the pair of temperature sensors (5a, 5b) and with the flow sensor and with the actuator (7), the local controller (8) also being in communication with a remote controller (19), the remote controller (19) being located remotely from the local controller (8);
the method comprising the steps of:

the local controller (8) reading the first time series of signals from the pair of temperature sensors (5a, 5b);
the local controller (8) reading the second time series of signals from the flow sensor;
the local controller (8) determining the third time series of rates of thermal energy exchange by the at least one thermal energy exchanger (4) based on the first and the second time series;
the local controller (8) transmitting the third time series to the remote controller (19) using a digital communication protocol;
the remote controller (19) determining the averaged series of rates by determining a plurality of moving averages of the time series of rates of thermal energy exchange;
the remote controller (19) producing the first bounded series of rates by replacing rates of the averaged series that are less than the lower threshold (13) with rates that equal the lower threshold (13);
the remote controller (19) producing the second bounded series of rates by replacing rates of the first bounded series that are greater than the upper threshold (15) with rates that equal the upper threshold (15);
the remote controller (19) determining the maximum rate of thermal energy exchange by applying a maximum filter (17) to the second bounded series, the maximum filter (17) returning the greatest rate of the second bounded series;
the remote controller (19) transmitting the maximum rate of thermal energy exchange to the local controller (8) using the digital communication protocol;

the local controller (8) reading the set point signal (9) indicative of the rate of thermal energy exchange by the at least one thermal energy exchanger (4);

the local controller (8) using the maximum rate to limit the set point signal (9);

the local controller (8) producing the limitation signal based on the limited set point signal (9); and

the local controller (8) transmitting the limitation signal to the actuator (7), the limitation signal causing the actuator (7) to limit the position of the valve member (6).

7. Application of any of the methods according to any of the claims 1 to 6 to limit the rate of exchange of thermal energy by at least one thermal energy exchanger (4) of a system for heating and/or ventilation and/or air-conditioning.

8. An assembly (1) comprising:

an inlet port (2) and an outlet port (3);

a fluid path extending between the inlet port (2) and the outlet port (3) and at least one thermal energy exchanger (4) situated in the fluid path;

a flow sensor in operative communication with the fluid path for recording a flow rate along the fluid path, a pair of temperature sensors (5a, 5b), the pair of temperature sensors (5a, 5b) comprising a first sensor (5a) for recording a temperature at or near the inlet port (2), the first sensor (5a) being in operative communication with the fluid path and arranged at or near the inlet port (2), the pair of temperature sensors (5a, 5b) comprising a second sensor (5b) for recording a temperature at or near the outlet port (3), the second sensor (5b) being in operative communication with the fluid path and arranged at or near the outlet port (3);

the assembly (1) comprising a valve member (6) situated in the fluid path between the inlet port (2) and the outlet port (3), the valve member (6) being selectively movable between a closed position which closes the fluid path between the inlet port (2) and the outlet port (3), and an open position which opens the fluid path between the inlet port (2) and the outlet port (3);

an actuator (7), secured relative to the assembly (1), for selectively moving the valve member (6) between the closed position and the open position;

a controller (8) secured relative to the assembly (1) and having a memory storing a lower threshold (13) and an upper threshold (15) and being in communication with the memory, with the actuator (7) and being in communication with the flow sensor and with the pair of temperature sensors (5a, 5b), the controller (8) being configured to:

read a first time series of signals from the pair of temperature sensors (5a, 5b);

determine a time series of temperature drops $\Delta T_{io}$, $\Delta T_{sr}$ based on the first time series of signals;

read a second time series of signals from the flow sensor;

determine a time series of flow rates $\varphi$ based on the second time series of signals;

determine a third time series of rates of thermal energy exchange by the at least one thermal energy exchanger (4) as a function of the time series of temperature drops $\Delta T_{io}$, $\Delta T_{sr}$ and as a function of the time series of flow rates $\varphi$;

determine an averaged series of rates by determining a plurality of moving averages of the time series of rates of thermal energy exchange;

determine a first bounded series of rates by replacing rates of the averaged series that are less than the lower threshold (13) with rates that equal the lower threshold (13);

determine a second bounded series of rates by replacing rates of the first bounded series that are greater than the upper threshold (15) with rates that equal the upper threshold (15);

determine a maximum rate of thermal energy exchange by applying a maximum filter (17) to the second bounded series, the maximum filter (17) returning the greatest rate of the second bounded series;

read a set point signal (9) indicative of a rate of exchange of thermal energy by the at least one thermal energy exchanger (4);

use the maximum rate to limit the set point signal (9);

produce a limitation signal from the limited set point signal; and

transmit the limitation signal to the actuator (7), the limitation signal causing the actuator (7) to limit the position of the valve member (6).

9. The assembly (1) according to claim 8,

wherein the pair of temperature sensors (5a, 5b) is secured relative to the assembly (1);

wherein the pair of temperature sensors (5a, 5b) is configured to sense a flow rate $\varphi$ of a fluid within the fluid path; and

wherein the pair of temperature sensors (5a, 5b) comprises the flow sensor.

10. The assembly (1) according to any of the claims 8 to 9,

> wherein the memory of the controller (8) additionally stores a scale factor;
> wherein the controller (8) is configured to:
> change the third time series of rates by multiplying each rate of the third time series with the scale factor.

11. The assembly (1) according to any of the claims 8 to 10,

> wherein the controller (8) comprises an input interface; and
> wherein the controller (8) is configured to:
> read the set point signal (9) from the input interface of the controller (8).

12. A computer program comprising instructions to cause the controller (8) of the assembly (1) of claim 8 to execute the steps of any of the methods of claims 1 to 4.

13. A computer-readable medium having stored thereon the computer program of claim 12.

14. A local controller (8) of an assembly (1), the assembly (1) comprising an inlet port (2), an outlet port (3), a fluid path extending between the inlet port (2) and the outlet port (3), a flow sensor in operative communication with the fluid path for recording a flow rate along the fluid path, a pair of temperature sensors (5a, 5b), the pair of temperature sensors (5a, 5b) comprising a first sensor (5a) for recording a temperature at or near the inlet port (2), the first sensor (5a) being in operative communication with the fluid path and arranged at or near the inlet port (2), the pair of temperature sensors (5a, 5b) comprising a second sensor (5b) for recording a temperature at or near the outlet port (3), the second sensor (5b) being in operative communication with the fluid path and arranged at or near the outlet port (3), the assembly (1) comprising a valve member (6) situated in the fluid path between the inlet port (2) and the outlet port (3), the valve member (6) being selectively movable between a closed position which closes the fluid path between the inlet port (2) and the outlet port (3), and an open position which opens the fluid path between the inlet port (2) and the outlet port (3), and an actuator (7) for selectively moving the valve member (6) between the closed position and the open position, the local controller (8) being configured to:

> read a first time series of signals from the pair of temperature sensors (5a, 5b);
determine a time series of temperature drops $\Delta T_{io}$, $\Delta T_{sr}$ based on the first time series of signals;
read a second time series of signals from the flow sensor;
determine a time series of flow rates $\varphi$ based on the second time series of signals;
determine a third time series of rates of thermal energy exchange by the at least one thermal energy exchanger (4) as a function of the time series of temperature drops $\Delta T_{io}$, $\Delta T_{sr}$ and as a function of the time series of flow rates $\varphi$;
transmit the third time series to the remote controller (19) according to claim 15 using a digital communication protocol;
receive a maximum rate from the remote controller (19) according to claim 15 using the digital communication protocol;
read a set point signal (9) indicative of a rate of exchange of thermal energy by the at least one thermal energy exchanger (4);
use the maximum rate to limit the set point signal (9);
produce a limitation signal from the limited set point signal; and
transmit the limitation signal to the actuator (7), the limitation signal causing the actuator (7) to limit the position of the valve member (6).

15. A remote controller (19) being configured to:

> receive a time series of rates of thermal energy exchange from the local controller (8) according to claim 14 using the digital communication protocol;
> determine an averaged series of rates by determining a plurality of moving averages of the time series of rates of thermal energy exchange;
> determine a first bounded series of rates by replacing rates of the averaged series that are less than a lower threshold (13) with rates that equal the lower threshold (13);
> determine a second bounded series of rates by replacing rates of the first bounded series that are greater than an upper threshold (15) with rates that equal the upper threshold (15);
> determine a maximum rate of thermal energy exchange by applying a maximum filter (17) to the second bounded series, the maximum filter (17) returning the greatest rate of the second bounded series; and
> transmit the maximum rate to the local controller (8) according to claim 14 using the digital communication protocol.

**Amended claims in accordance with Rule 137(2) EPC.**

1. A method of limiting a rate of exchange of thermal energy via at least one thermal energy exchanger (4) of an assembly (1), the assembly (1) comprising an inlet port (2), an outlet port (3), a fluid path extending between the inlet port (2) and the outlet port (3), a pair of temperature sensors (5a, 5b), a flow sensor for recording a flow rate along the fluid path, the at least one thermal energy exchanger (4) and a valve member (6) in fluid communication with the at least one thermal energy exchanger (4) and an actuator (7) coupled to the valve member (6), the pair of sensors (5a, 5b) comprising a first sensor (5a) for recording a temperature at or near the inlet port (2) and a second sensor (5b) for recording a temperature at or near the outlet port (3), the valve member (6) being selectively movable between a closed position which closes the fluid path between the inlet port (2) and the outlet port (3), and an open position which opens the fluid path between the inlet port (2) and the outlet port (3), the method comprising the steps of:

   reading a first time series of signals from the pair of temperature sensors (5a, 5b);
   determining a time series of temperature drops $\Delta T_{io}$, $\Delta T_{sr}$ based on the first time series of signals;
   reading a second time series of signals from the flow sensor;
   determining a time series of flow rates $\varphi$ based on the second time series of signals;
   determining a third time series of rates of thermal energy exchange by the at least one thermal energy exchanger (4) as a function of the time series of temperature drops $\Delta T_{io}$, $\Delta T_{sr}$ and as a function of the time series of flow rates $\varphi$;
   producing an averaged series of rates by determining a plurality of moving averages of the third time series;
   producing a first bounded series of rates by replacing rates of the averaged series that are less than a lower threshold (13) with rates that equal the lower threshold (13);
   producing a second bounded series of rates by replacing rates of the first bounded series that are greater than an upper threshold (15) with rates that equal the upper threshold (15);
   determining a maximum rate of thermal energy exchange by applying a maximum filter (17) to the second bounded series, the maximum filter (17) returning the greatest rate of the second bounded series;
   reading a set point signal (9) indicative of a rate of exchange of thermal energy by the at least one thermal energy exchanger (4);
   using the maximum rate to limit the set point signal (9);
   producing a limitation signal from the limited set point signal (9); and
   transmitting the limitation signal to the actuator (7), the limitation signal causing the actuator (7) to limit the position of the valve member (6).

2. The method according to claim 1, the method comprising the step of:
   changing the third time series by using a multiplier (12) to multiply each rate of thermal energy exchange of the third time series with a scale factor.

3. The method according to any of the claims 1 to 2, the method comprising the steps of:

   connecting to a mobile handheld device (18);
   receiving a mobile application signal from the mobile handheld device (18) using a digital communication protocol;
   setting at least one variable as a function of the mobile application signal, the at least one variable being selected from:

   - a window size for a moving average filter (11),
   - a lower threshold value (13),
   - an upper threshold value (15),
   - a window size for the maximum filter (17),

   after setting the at least one variable:

   reading the first time series of signals from the pair of temperature sensors (5a, 5b);
   reading the second time series of signals from the flow sensor;
   determining the third time series of rates of thermal energy exchange by the at least one thermal energy exchanger (4) based on the first and the second time series;
   determining the averaged series of rates by applying the moving average filter (11) to the third time series, the moving average filter (11) determining a plurality of subsets of the third time series and calculating an arithmetic average for each subset of the plurality of subsets, each subset of the plurality of subsets being at least as long as the window size for the moving average filter (11);
   producing the first bounded series of rates by replacing rates of the averaged series that are less than the lower threshold value (13) with rates that equal the lower threshold value (13);
   producing the second bounded series of rates by replacing rates of the first bounded series that are greater than the upper threshold value (15) with rates that equal the upper threshold value (15);
determining the maximum rate of thermal energy exchange by applying the maximum filter (17) to the second bounded series;
the maximum filter (17) determining a subset of the second bounded series; and
the maximum filter (17) returning the greatest rate of the subset of the second bounded series, the subset of the second bounded series being at least as long as the window size for the maximum filter (17).

4. The method according to any of the claims 1 to 2, the method comprising the steps of:

connecting to a remote controller (19);
receiving a remote control signal from the remote controller (19) using a digital communication protocol;
setting at least one variable as a function of the remote control signal, the at least one variable being selected from:

- a window size for a moving average filter (11),
- a lower threshold value (13),
- an upper threshold value (15),
- a window size for the maximum filter (17),

after setting the at least one variable:

reading the first time series of signals from the pair of temperature sensors (5a, 5b);
reading the second time series of signals from the flow sensor;
determining the third time series of rates of thermal energy exchange by the at least one thermal energy exchanger (4) based on the first and the second time series;
determining the averaged series of rates by applying the moving average filter (11) to the third time series, the moving average filter (11) determining a plurality of subsets of the third time series and calculating an arithmetic average for each subset of the plurality of subsets, each subset of the plurality of subsets being at least as long as the window size for the moving average filter (11);
producing the first bounded series of rates by replacing rates of the averaged series that are less than the lower threshold value (13) with rates that equal the lower threshold value (13);
producing the second bounded series of rates by replacing rates of the first bounded series that are greater than the upper threshold value (15) with rates that equal the upper threshold value (15);
determining the maximum rate of thermal energy exchange by applying the maximum filter (17) to the second bounded series;
the maximum filter (17) determining a subset of the second bounded series; and
the maximum filter (17) returning the greatest rate of the subset of the second bounded series, the subset of the second bounded series being at least as long as the window size for the maximum filter (17).

5. The method according to any of the claims 1 to 4,

wherein the assembly (1) additionally comprises a local controller (8) in communication with the pair of temperature sensors (5a, 5b) and with the flow sensor and with the actuator (7), the local controller (8) also being in communication with a remote controller (19), the remote controller (19) being located remotely from the local controller (8);
the method comprising the steps of:

the local controller (8) reading the first time series of signals from the pair of temperature sensors (5a, 5b);
the local controller (8) reading the second time series of signals from the flow sensor;
the local controller (8) transmitting the first and the second time series of signals to the remote controller (19) using a digital communication protocol;
the remote controller (19) determining the third time series from the time series of signals;
the remote controller (19) determining the third time series of rates of thermal energy exchange by the at least one thermal energy exchanger (4) based on the first and the second time series;
the remote controller (19) producing the first bounded series of rates by replacing rates of the averaged series that are less than the lower threshold (13) with rates that equal the lower threshold (13);
the remote controller (19) determining the maximum rate of thermal energy exchange by applying a maximum filter (17) to the second bounded series, the maximum filter (17) returning the greatest rate of the second bounded series;
the remote controller (19) transmitting the maximum rate of thermal energy exchange to the local controller (8) using the digital communication protocol;
the local controller (8) reading the set point signal (9) indicative of the rate of thermal energy exchange by the at least one thermal energy exchanger (4);

the local controller (8) using the maximum rate to limit the set point signal (9);

the local controller (8) producing the limitation signal based on the limited set point signal (9); and

the local controller (8) transmitting the limitation signal to the actuator (7), the limitation signal causing the actuator (7) to limit the position of the valve member (6).

6. The method according to any of the claims 1 to 4,

wherein the assembly (1) additionally comprises a local controller (8) in communication with the pair of temperature sensors (5a, 5b) and with the flow sensor and with the actuator (7), the local controller (8) also being in communication with a remote controller (19), the remote controller (19) being located remotely from the local controller (8);

the method comprising the steps of:

the local controller (8) reading the first time series of signals from the pair of temperature sensors (5a, 5b);

the local controller (8) reading the second time series of signals from the flow sensor;

the local controller (8) determining the third time series of rates of thermal energy exchange by the at least one thermal energy exchanger (4) based on the first and the second time series;

the local controller (8) transmitting the third time series to the remote controller (19) using a digital communication protocol;

the remote controller (19) determining the averaged series of rates by determining a plurality of moving averages of the time series of rates of thermal energy exchange;

the remote controller (19) producing the first bounded series of rates by replacing rates of the averaged series that are less than the lower threshold (13) with rates that equal the lower threshold (13);

the remote controller (19) producing the second bounded series of rates by replacing rates of the first bounded series that are greater than the upper threshold (15) with rates that equal the upper threshold (15);

the remote controller (19) determining the maximum rate of thermal energy exchange by applying a maximum filter (17) to the second bounded series, the maximum filter (17) returning the greatest rate of the second bounded series;

the remote controller (19) transmitting the maximum rate of thermal energy exchange to the local controller (8) using the digital communication protocol;

the local controller (8) reading the set point signal (9) indicative of the rate of thermal energy exchange by the at least one thermal energy exchanger (4);

the local controller (8) using the maximum rate to limit the set point signal (9);

the local controller (8) producing the limitation signal based on the limited set point signal (9); and

the local controller (8) transmitting the limitation signal to the actuator (7), the limitation signal causing the actuator (7) to limit the position of the valve member (6).

7. An assembly (1) comprising:

an inlet port (2) and an outlet port (3);

a fluid path extending between the inlet port (2) and the outlet port (3) and at least one thermal energy exchanger (4) situated in the fluid path;

a flow sensor in operative communication with the fluid path for recording a flow rate along the fluid path, a pair of temperature sensors (5a, 5b), the pair of temperature sensors (5a, 5b) comprising a first sensor (5a) for recording a temperature at or near the inlet port (2), the first sensor (5a) being in operative communication with the fluid path and arranged at or near the inlet port (2), the pair of temperature sensors (5a, 5b) comprising a second sensor (5b) for recording a temperature at or near the outlet port (3), the second sensor (5b) being in operative communication with the fluid path and arranged at or near the outlet port (3);

the assembly (1) comprising a valve member (6) situated in the fluid path between the inlet port (2) and the outlet port (3), the valve member (6) being selectively movable between a closed position which closes the fluid path between the inlet port (2) and the outlet port (3), and an open position which opens the fluid path between the inlet port (2) and the outlet port (3);

an actuator (7), secured relative to the assembly (1), for selectively moving the valve member (6) between the closed position and the open position;

a controller (8) secured relative to the assembly (1) and having a memory storing a lower threshold (13) and an upper threshold (15) and being in communication with the memory, with the actuator (7) and being in communication with the flow sensor and with the pair of temperature sensors (5a, 5b), the controller (8) being configured to:

read a first time series of signals from the pair of temperature sensors (5a, 5b);

determine a time series of temperature drops $\Delta T_{io}$, $\Delta T_{sr}$ based on the first time series of signals;

read a second time series of signals from the flow sensor;

determine a time series of flow rates $\varphi$ based on the second time series of signals;

determine a third time series of rates of thermal energy exchange by the at least one thermal energy exchanger (4) as a function of the time series of temperature drops $\Delta T_{io}$, $\Delta T_{sr}$ and as a function of the time series of flow rates $\varphi$;

determine an averaged series of rates by determining a plurality of moving averages of the time series of rates of thermal energy exchange;

determine a first bounded series of rates by replacing rates of the averaged series that are less than the lower threshold (13) with rates that equal the lower threshold (13);

determine a second bounded series of rates by replacing rates of the first bounded series that are greater than the upper threshold (15) with rates that equal the upper threshold (15);

determine a maximum rate of thermal energy exchange by applying a maximum filter (17) to the second bounded series, the maximum filter (17) returning the greatest rate of the second bounded series;

read a set point signal (9) indicative of a rate of exchange of thermal energy by the at least one thermal energy exchanger (4);

use the maximum rate to limit the set point signal (9);

produce a limitation signal from the limited set point signal; and

transmit the limitation signal to the actuator (7), the limitation signal causing the actuator (7) to limit the position of the valve member (6).

8. The assembly (1) according to claim 7,

wherein the pair of temperature sensors (5a, 5b) is secured relative to the assembly (1);

wherein the pair of temperature sensors (5a, 5b) is configured to sense a flow rate $\varphi$ of a fluid within the fluid path; and

wherein the pair of temperature sensors (5a, 5b) comprises the flow sensor.

9. The assembly (1) according to any of the claims 7 to 8,

wherein the memory of the controller (8) additionally stores a scale factor;

wherein the controller (8) is configured to:

change the third time series of rates by multiplying each rate of the third time series with the scale factor.

10. The assembly (1) according to any of the claims 7 to 9,

wherein the controller (8) comprises an input interface; and

wherein the controller (8) is configured to:

read the set point signal (9) from the input interface of the controller (8).

11. A computer program comprising instructions to cause the controller (8) of the assembly (1) of claim 7 to execute the steps of any of the methods of claims 1 to 4.

12. A computer-readable medium having stored thereon the computer program of claim 11.

13. A local controller (8) of an assembly (1), the assembly (1) comprising an inlet port (2), an outlet port (3), a fluid path extending between the inlet port (2) and the outlet port (3), a flow sensor in operative communication with the fluid path for recording a flow rate along the fluid path, a pair of temperature sensors (5a, 5b), the pair of temperature sensors (5a, 5b) comprising a first sensor (5a for recording a temperature at or near the inlet port (2), the first sensor (5a) being in operative communication with the fluid path and arranged at or near the inlet port (2), the pair of temperature sensors (5a, 5b) comprising a second sensor (5b) for recording a temperature at or near the outlet port (3), the second sensor (5b) being in operative communication with the fluid path and arranged at or near the outlet port (3), the assembly (1) comprising a valve member (6) situated in the fluid path between the inlet port (2) and the outlet port (3), the valve member (6) being selectively movable between a closed position which closes the fluid path between the inlet port (2) and the outlet port (3), and an open position which opens the fluid path between the inlet port (2) and the outlet port (3), and an actuator (7) for selectively moving the valve member (6) between the closed position and the open position, the local controller (8) being configured to:

read a first time series of signals from the pair of temperature sensors (5a, 5b);

determine a time series of temperature drops $\Delta T_{io}$, $\Delta T_{sr}$ based on the first time series of signals;

read a second time series of signals from the flow sensor;

determine a time series of flow rates $\varphi$ based on the second time series of signals;

determine a third time series of rates of thermal energy exchange by the at least one thermal energy exchanger (4) as a function of the time series of temperature drops $\Delta T_{io}$, $\Delta T_{sr}$ and as a function of the time series of flow rates $\varphi$;

transmit the third time series to the remote controller (19) according to claim 14 using a digital communication protocol;

receive a maximum rate from the remote controller (19) according to claim 14 using the digital communication protocol;

read a set point signal (9) indicative of a rate of exchange of thermal energy by the at least one thermal energy exchanger (4);

use the maximum rate to limit the set point signal (9);

produce a limitation signal from the limited set point signal; and

transmit the limitation signal to the actuator (7), the limitation signal causing the actuator (7) to limit the position of the valve member (6).

14. A remote controller (19) being configured to:

receive a time series of rates of thermal energy exchange from the local controller (8) according to claim 13 using the digital communication protocol;

determine an averaged series of rates by determining a plurality of moving averages of the time series of rates of thermal energy exchange;

determine a first bounded series of rates by replacing rates of the averaged series that are less than a lower threshold (13) with rates that equal the lower threshold (13);

determine a second bounded series of rates by replacing rates of the first bounded series that are greater than an upper threshold (15) with rates that equal the upper threshold (15);

determine a maximum rate of thermal energy exchange by applying a maximum filter (17) to the second bounded series, the maximum filter (17) returning the greatest rate of the second bounded series; and

transmit the maximum rate to the local controller (8) according to claim 13 using the digital communication protocol.

FIG 1

FIG 2

FIG 3

FIG 4

| | Europäisches Patentamt European Patent Office Office européen des brevets | **EUROPEAN SEARCH REPORT** | | **Application Number** EP 25 17 3812 |
|---|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2018/210474 A1 (D'SILVA VINOD [CH] ET AL) 26 July 2018 (2018-07-26) | 1-14 | INV. G05D23/19 |
| A | * paragraphs [0002], [0043] - [0047], [0049], [0051], [0053]; figure 1 * ----- | 15 | F24D19/10 F24F11/30 |
| X,D | EP 3 940 497 A1 (SIEMENS SCHWEIZ AG [CH]) 19 January 2022 (2022-01-19) | 15 | |
| Y | * paragraph [0001]; claims 1, 15; figure 2 * ----- | 1-14 | |

TECHNICAL FIELDS SEARCHED (IPC)

G05D

The present search report has been drawn up for all claims

| Place of search | Date of completion of the search | Examiner |
|---|---|---|
| Munich | 25 June 2025 | Nicolaucig, Aldo |

EPO FORM 1503 03.82 (P04C01)

2

## ANNEX TO THE EUROPEAN SEARCH REPORT
## ON EUROPEAN PATENT APPLICATION NO.

EP 25 17 3812

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2025

| Patent document cited in search report | | Publication date | Patent family member(s) | | Publication date |
|---|---|---|---|---|---|
| US 2018210474 | A1 | 26-07-2018 | CH | 705466 A1 | 15-03-2013 |
| | | | CN | 103946761 A | 23-07-2014 |
| | | | DK | 2753999 T3 | 30-07-2018 |
| | | | EP | 2753999 A1 | 16-07-2014 |
| | | | RU | 2014113380 A | 20-10-2015 |
| | | | US | 2014222218 A1 | 07-08-2014 |
| | | | US | 2018210474 A1 | 26-07-2018 |
| | | | WO | 2013034358 A1 | 14-03-2013 |
| EP 3940497 | A1 | 19-01-2022 | CN | 113944993 A | 18-01-2022 |
| | | | EP | 3940497 A1 | 19-01-2022 |
| | | | US | 2022019249 A1 | 20-01-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3428767 A1
- US 2019018432 A1
- EP 3428767 B1
- EP 3115703 A1
- EP 3115703 B1
- EP 3489591 A1
- WO 2010010092 A2
- EP 3940497 A1
- EP 3940497 B1
- US 2018210474 A1